# EUROPEAN PATENT APPLICATION

(11) **EP 4 761 169 A1**
(43) Date of publication of application: **17.06.2026**
(21) Application number: 24852366.4
(22) Date of filing: 08.08.2024
(51) Int. Cl.: H04L 5/14, H04L 5/00, H04W 72/232, H04W 72/231

(54) **OPERATION METHOD OF DEVICE IN WIRELESS COMMUNICATION SYSTEM, AND DEVICE USING METHOD**

(30) Priority: 10.08.2023 US 202363531811 P; 15.09.2023 KR 20230123277
(71) Applicant: LG Electronics Inc., Yeongdeungpo-gu Seoul 07336 (KR)
(72) Inventor: YOU, Hyangsun, Seoul 06772 (KR); SHIM, Jaenam, Seoul 06772 (KR); KO, Hyunsoo, Seoul 06772 (KR); KIM, Seonwook, Seoul 06772 (KR)
(74) Representative: Plasseraud IP
(86) International application number: PCT/KR2024/011788
(87) International publication number: WO 2025/034013

(57) **Abstract**

An operation method of a device in a wireless communication system, and the device are provided. The device receives first information for configuring periodic full duplex (FD) time resources, receives second information indicating non-FD time resources, and performs a transmission/reception operation on the basis of the first information and the second information. The second information is for switching some of the FD time resources to the non-FD time resources in units of a specific interval. The specific interval can be a time division duplex (TDD) cycle, which is provided by means of TDD configuration information, or a time interval equal to a multiple of the TDD cycle.

## Description

### TECHNICAL FIELD

This disclosure relates to a method of operating a device in a wireless communication system and a device using the method.

### BACKGROUND ART

As more and more communication devices require more communication capacity, there is a need for improved mobile broadband communication over existing radio access technology. Also, massive machine type communications (MTC), which provides various services by connecting many devices and objects, is one of the major issues to be considered in the next generation communication. In addition, communication system design considering reliability/latency sensitive service/UE is being discussed. The introduction of next generation radio access technology considering enhanced mobile broadband communication (eMBB), massive MTC (mMTC), ultra-reliable and low latency communication (URLLC) is discussed. This new technology may be called new radio access technology (new RAT or NR) in the present disclosure for convenience.

In NR, full duplex (FD) operation can be performed. When performing FD operation, downlink reception and uplink transmission can occur simultaneously in a given time resource, which is different from half duplex (HD) operation in which only either downlink reception or uplink transmission can be performed in a specific time resource. For FD operation, i) in the same time resource, some frequency resources may be allocated to downlink subbands and other frequency resources to uplink subbands, or ii) frequency resources may be allocated that can be used for both downlink reception and uplink transmission in the same time resource.

The former may be called subband-wise full duplex (hereinafter referred to as subband full duplex or SBFD), and the latter may be called spectrum-sharing full duplex (hereinafter referred to as SSFD).

In a case where a network (or a cell) operates in FD, for example, SBFD, a UE is indicated with information on time resources in which the network operates in the SBFD, and may determine the SBFD operation time resources therefrom.

Meanwhile, an apparatus may consider an operation of falling back some of the time resources operating in the SBFD to non-SBFD time resources in order to increase downlink throughput. That is, by switching some of the time resources configured as the SBFD time resources to non-SBFD time resources, a conventional HD operation (or TDD operation) instead of the FD operation may be performed in the corresponding time resources.

A signaling method for such a fallback operation may be a problem.

In addition, in the case of the aforementioned fallback operation, a transition between the SBFD time resource and the non-SBFD time resource may occur more frequently than in a case where the fallback operation is not performed. Then, this may cause a problem that operational complexity of a base station and the UE and overhead due to a transition period increase.

### DISCLOSURE

### TECHNICAL PROBLEM

The technical problem that the present disclosure aims to solve is to provide a method of operating a device in a wireless communication system and a device that uses the method.

### TECHNICAL SOLUTION

In one aspect, provided is a method of operating a user equipment (UE) in a wireless communication system. The method includes receiving first information for configuring periodic full duplex (FD) time resources, receiving second information indicating non-FD time resources, and performing a transmission and reception operation based on the first information and the second information. The second information is information for switching some of the FD time resources to the non-FD time resources in units of a specific period, and the specific period is a time interval equal to a time division duplex (TDD) period provided by TDD configuration information or a multiple of the TDD period.

In another aspect, provided are a UE, an apparatus and computer readable medium (CRM) performing the method.

In still another aspect, provided are a method of operating a base station in a wireless communication system, and a base station using the operating method.

The base station transmits first information for configuring periodic full duplex (FD) time resources to a user equipment (UE), transmits second information indicating non-FD time resources to the UE, and communicates with the UE based on the first information and the second information. The second information is information for switching some of the FD time resources to the non-FD time resources in units of a specific period, and the specific period is a time interval equal to a time division duplex (TDD) period provided by TDD configuration information or a multiple of the TDD period.

### ADVANTAGEOUS EFFECTS

According to the method according to the present disclosure, in a case where a fallback operation of switching and using time resources configured as SBFD resources as non-SBFD resources is supported, a frequency of occurrence of a transition between the SBFD time resource and the non-SBFD time resource can be lowered. Accordingly, it is possible to prevent operational complexity between apparatuses from increasing, and it is also possible to prevent a throughput from decreasing due to frequent transition periods.

### BRIEF DESCRIPTION OF THE DRAWINGS

FIG. 1 illustrates a wireless communication system to which the present disclosure can be applied.
FIG. 2 is a block diagram showing the radio protocol architecture for the user plane.
FIG. 3 is a block diagram showing the radio protocol structure for the control plane.
FIG. 4 illustrates the system structure of a next-generation radio access network (NG-RAN) to which NR is applied.
FIG. 5 illustrates the functional division between NG-RAN and 5GC.
FIG. 6 illustrates a frame structure that can be applied in NR.
FIG. 7 illustrates the slot structure.
FIG. 8 illustrates the CORESET.
FIG. 9 shows an example of a frame structure for a new wireless access technology.
FIG. 10 illustrates the structure of a self-contained slot.
FIG. 11 illustrates physical channels and typical signal transmission.
FIG. 12 shows examples of how to apply full duplex within an intra-carrier.
FIG. 13 shows an example in which a time resource operating in half duplex (HD) and a time resource operating in full duplex (FD) such as SBFD or SSFD exist together.
FIG. 14 shows examples of first time resource, second time resource, first frequency resource and second frequency resource.
FIG. 15 shows another example of a first time resource, a second time resource, a first frequency resource, and a second frequency resource.
FIG. 16 illustrates a TDD fallback operation.
FIG. 17 illustrates a configuration example of SBFD-DCI.
FIG. 18 illustrates SBFD symbols semi-statically configured or determined.
FIG. 19 illustrates examples in which some of SBFD symbols existing within a period P interval are switched to non-SBFD symbols.
FIG. 20 illustrates a method for switching some of SBFD symbols to non-SBFD symbols according to proposed method 2.
FIG. 21 illustrates an operating method of a UE in a wireless communication system.
FIG. 22 illustrates an example in which a base station and a UE operate in a wireless communication system according to the method of FIG. 21.
FIG. 23 illustrates a wireless device that can be applied the present specification.
FIG. 24 shows an example of a signal processing module structure.
FIG. 25 shows another example of the structure of a signal processing module in a transmission device.
FIG. 26 shows an example of a wireless communication device according to an implementation example of the present disclosure.
FIG. 27 shows an example of the processor 2000.
FIG. 28 shows an example of the processor 3000.
FIG. 29 shows another example of a wireless device.
FIG. 30 shows another example of a wireless device applied to the present specification.
FIG. 31 illustrates the communication system 1 applied to this specification.

### MODE FOR INVENTION

In the present specification, "A or B" may mean "only A", "only B" or "both A and B". In other words, in the present specification, "A or B" may be interpreted as "A and/or B". For example, in the present specification, "A, B, or C" may mean "only A", "only B", "only C", or "any combination of A, B, C".

A slash (/) or comma used in the present specification may mean "and/or". For example, "A/B" may mean "A and/or B". Accordingly, "A/B" may mean "only A", "only B", or "both A and B". For example, "A, B, C" may mean "A, B, or C".

In the present specification, "at least one of A and B" may mean "only A", "only B", or "both A and B". In addition, in the present specification, the expression "at least one of A or B" or "at least one of A and/or B" may be interpreted as "at least one of A and B".

In addition, in the present specification, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present specification may mean "for example". Specifically, when indicated as "control information (PDCCH)", it may mean that "PDCCH" is proposed as an example of the "control information". In other words, the "control information" of the present specification is not limited to "PDCCH", and "PDCCH" may be proposed as an example of the "control information". In addition, when indicated as "control information (i.e., PDCCH)", it may also mean that "PDCCH" is proposed as an example of the "control information".

Technical features described individually in one figure in the present specification may be individually implemented, or may be simultaneously implemented.

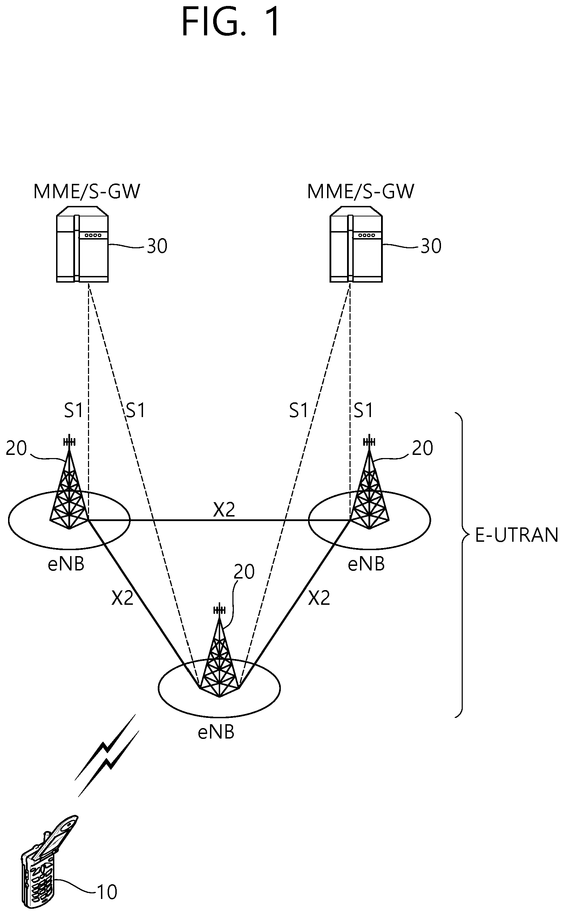

FIG. 1 illustrates a wireless communication system to which the present disclosure can be applied. This may also be called E-UTRAN (Evolved-UMTS Terrestrial Radio Access Network), or LTE (Long Term Evolution)/LTE-A system.

The E-UTRAN includes a base station (BS) 20 which provides a control plane and a user plane to a user equipment (UE) 10. The UE 10 may be fixed or mobile, and may be referred to as another terminology, such as a mobile station (MS), a user terminal (UT), a subscriber station (SS), a mobile terminal (MT), a wireless device, terminal etc. The BS 20 is generally a fixed station that communicates with the UE 10 and may be referred to as another terminology, such as an evolved node-B (eNB), a base transceiver system (BTS), an access point, etc.

The BSs are interconnected by means of an X2 interface. The BSs are also connected by means of an S1 interface to an evolved packet core (EPC) 30, more specifically, to a mobility management entity (MME) through S1-MME and to a serving gateway (S-GW) through S1-U.

The EPC 30 includes an MME, an S-GW, and a packet data network-gateway (P-GW). The MME has access information of the UE or capability information of the UE, and such information is generally used for mobility management of the UE. The S-GW is a gateway having an E-UTRAN as an end point. The P-GW is a gateway having a PDN as an end point.

Layers of a radio interface protocol between the UE and the network can be classified into a first layer (L1), a second layer (L2), and a third layer (L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

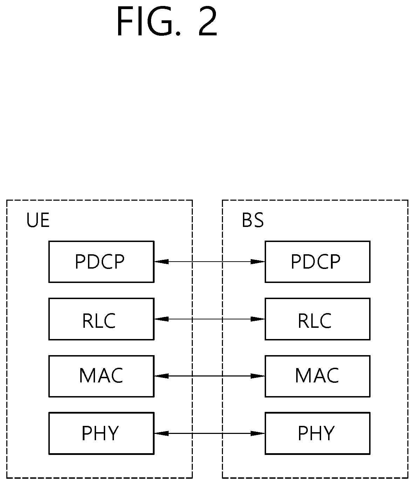

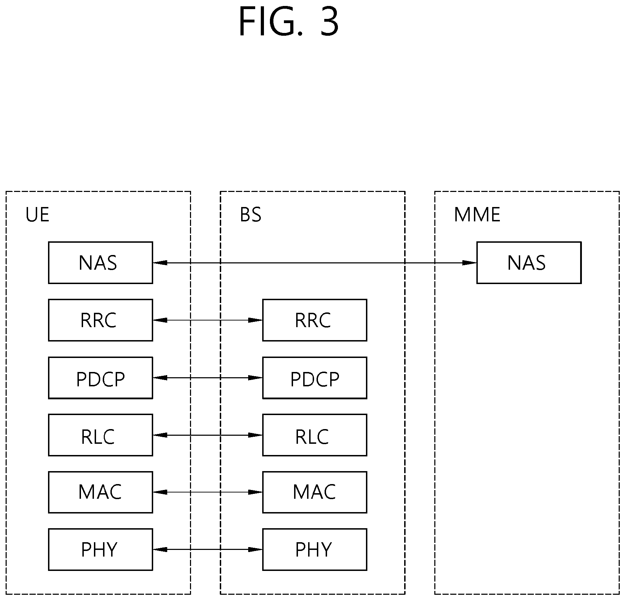

FIG. 2 is a block diagram showing the radio protocol architecture for the user plane. FIG. 3 is a block diagram showing the radio protocol structure for the control plane. The user plane is a protocol stack for user data transmission. The control plane is a protocol stack for control signal transmission.

Referring to FIG. 2 and FIG. 3, a PHY layer provides an upper layer (=higher layer) with an information transfer service through a physical channel. The PHY layer is connected to a medium access control (MAC) layer which is an upper layer of the PHY layer through a transport channel. Data is transferred between the MAC layer and the PHY layer through the transport channel. The transport channel is classified according to how and with what characteristics data is transferred through a radio interface.

Data is moved between different PHY layers, that is, the PHY layers of a transmitter and a receiver, through a physical channel. The physical channel may be modulated according to an Orthogonal Frequency Division Multiplexing (OFDM) scheme, and use the time and frequency as radio resources.

The functions of the MAC layer include mapping between a logical channel and a transport channel and multiplexing and demultiplexing to a transport block that is provided through a physical channel on the transport channel of a MAC Service Data Unit (SDU) that belongs to a logical channel. The MAC layer provides service to a Radio Link Control (RLC) layer through the logical channel.

The functions of the RLC layer include the concatenation, segmentation, and reassembly of an RLC SDU. In order to guarantee various types of Quality of Service (QoS) required by a Radio Bearer (RB), the RLC layer provides three types of operation mode: Transparent Mode (TM), Unacknowledged Mode (UM), and Acknowledged Mode (AM). AM RLC provides error correction through an Automatic Repeat Request (ARQ).

The RRC layer is defined only on the control plane. The RRC layer is related to the configuration, reconfiguration, and release of radio bearers, and is responsible for control of logical channels, transport channels, and PHY channels. An RB means a logical route that is provided by the first layer (PHY layer) and the second layers (MAC layer, the RLC layer, and the PDCP layer) in order to transfer data between UE and a network.

The function of a Packet Data Convergence Protocol (PDCP) layer on the user plane includes the transfer of user data and header compression and ciphering. The function of the PDCP layer on the user plane further includes the transfer and encryption/integrity protection of control plane data.

What an RB is configured means a process of defining the characteristics of a wireless protocol layer and channels in order to provide specific service and configuring each detailed parameter and operating method. An RB can be divided into two types of a Signaling RB (SRB) and a Data RB (DRB). The SRB is used as a passage through which an RRC message is transmitted on the control plane, and the DRB is used as a passage through which user data is transmitted on the user plane.

If RRC connection is established between the RRC layer of UE and the RRC layer of an E-UTRAN, the UE is in the RRC connected state. If not, the UE is in the RRC idle state.

A downlink transport channel through which data is transmitted from a network to UE includes a broadcast channel (BCH) through which system information is transmitted and a downlink shared channel (SCH) through which user traffic or control messages are transmitted. Traffic or a control message for downlink multicast or broadcast service may be transmitted through the downlink SCH, or may be transmitted through an additional downlink multicast channel (MCH). Meanwhile, an uplink transport channel through which data is transmitted from UE to a network includes a random access channel (RACH) through which an initial control message is transmitted and an uplink shared channel (SCH) through which user traffic or control messages are transmitted.

Logical channels that are placed over the transport channel and that are mapped to the transport channel include a broadcast control channel (BCCH), a paging control channel (PCCH), a common control channel (CCCH), a multicast control channel (MCCH), and a multicast traffic channel (MTCH).

The physical channel includes several OFDM symbols in the time domain and several subcarriers in the frequency domain. One subframe includes a plurality of OFDM symbols in the time domain. An RB is a resources allocation unit, and includes a plurality of OFDM symbols and a plurality of subcarriers. Furthermore, each subframe may use specific subcarriers of specific OFDM symbols (e.g., the first OFDM symbol) of the corresponding subframe for a physical downlink control channel (PDCCH), that is, an L1/L2 control channel. A Transmission Time Interval (TTI) is a unit time for subframe transmission.

Hereinafter, a new radio access technology (new RAT, NR) will be described.

As more and more communication devices require more communication capacity, there is a need for improved mobile broadband communication over existing radio access technology. Also, massive machine type communications (MTC), which provides various services by connecting many devices and objects, is one of the major issues to be considered in the next generation communication. In addition, communication system design considering reliability/latency sensitive service/UE is being discussed. The introduction of next generation radio access technology considering enhanced mobile broadband communication (eMBB), massive MTC (mMTC), ultra-reliable and low latency communication (URLLC) is discussed. This new technology may be called new RAT or NR in the present disclosure for convenience.

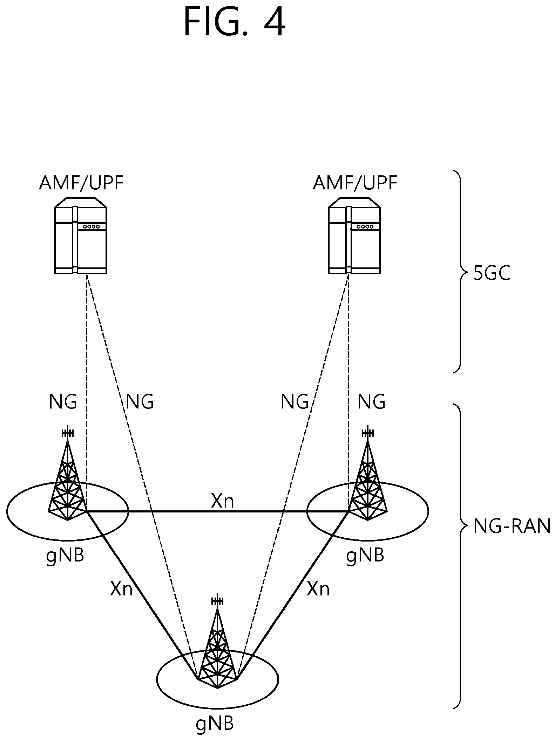

FIG. 4 illustrates a system structure of a next generation radio access network (NG-RAN) to which NR is applied.

Referring to FIG. 4, the NG-RAN may include a gNB and/or an eNB that provides user plane and control plane protocol termination to a UE. FIG. 4 illustrates the case of including only gNBs. The gNBs(eNBs) are connected by an Xn interface. The gNB and the eNB are connected to a 5G core network (5GC) via an NG interface. More specifically, the gNB and the eNB are connected to an access and mobility management function (AMF) via an NG-C interface and connected to a user plane function (UPF) via an NG-U interface.

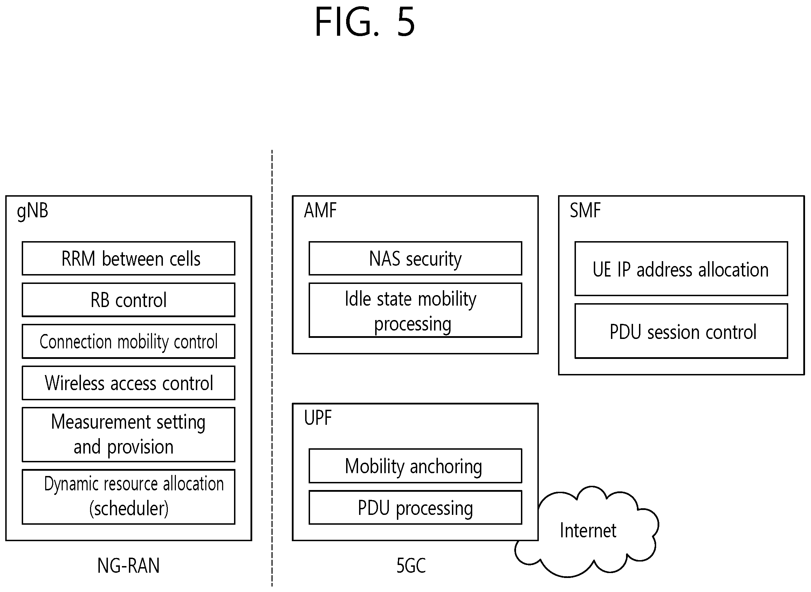

FIG. 5 illustrates a functional division between an NG-RAN and a 5GC.

Referring to FIG. 5, the gNB may provide functions such as an inter-cell radio resource management (Inter Cell RRM), radio bearer management (RB control), connection mobility control, radio admission control, measurement configuration & provision, dynamic resource allocation, and the like. The AMF may provide functions such as NAS security, idle state mobility handling, and so on. The UPF may provide functions such as mobility anchoring, PDU processing, and the like. The SMF may provide functions such as UE IP address assignment, PDU session control, and so on.

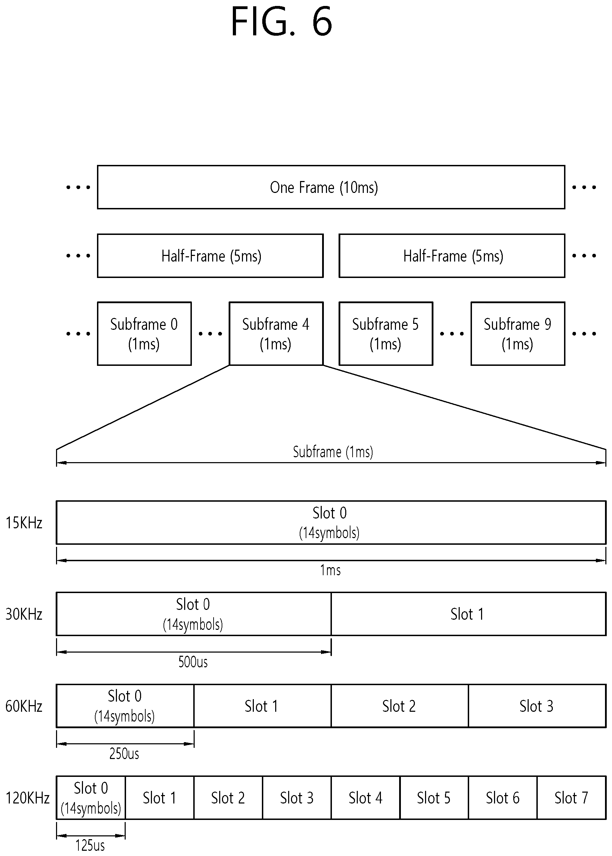

FIG. 6 illustrates an example of a frame structure that may be applied in NR.

Referring to FIG. 6, in the NR, a radio frame (hereinafter, also referred to as a frame) may be used in uplink and downlink transmissions. The frame has a length of 10ms, and may be defined as two 5ms half-frames (HFs). The HF may be defined as five 1ms subframes (SFs). The SF may be divided into one or more slots, and the number of slots within the SF depends on a subcarrier spacing (SCS). Each slot includes 12 or 14 OFDM(A) symbols according to a cyclic prefix (CP). In case of using a normal CP, each slot includes 14 symbols. In case of using an extended CP, each slot includes 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

The following table 1 illustrates a subcarrier spacing configuration µ.

**[Table 1]**

| µ | Δf = 2^{µ}·15[kHz] | Cyclic prefix (CP) |
|---|---|---|
| 0 | 15 | Normal |
| 1 | 30 | Normal |
| 2 | 60 | Normal Extended |
| 3 | 120 | Normal |
| 4 | 240 | Normal |

The following table 2 illustrates the number of slots in a frame (N^{frame,µ}ₛₗₒₜ), the number of slots in a subframe (N^{subframe,µ}ₛₗₒₜ), the number of symbols in a slot (N^{slot}_{symb}), and the like, according to subcarrier spacing configurations µ.

**[Table 2]**

| µ | N^{slot}_{symb} | N^{frame,µ}ₛₗₒₜ | N^{subframe,µ}ₛₗₒₜ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

FIG. 6 illustrates a case of µ=0, 1, 2, 3.

Table 2-1 below illustrates that the number of symbols per slot, the number of slots per frame, and the number of slots per subframe vary depending on the SCS, in case of using an extended CP.

**[Table 2-1]**

| SCS(15*2^{µ}) | N^{slot}_{symb} | N^{frame, µ} ₛₗₒₜ | N^{subframe, µ} ₛₗₒₜ |
|---|---|---|---|
| 60KHz (µ=2) | 12 | 40 | 4 |

In an NR system, OFDM(A) numerologies (e.g., SCS, CP length, and so on) may be differently configured between a plurality of cells integrated to one UE. Accordingly, an (absolute time) duration of a time resource (e.g., SF, slot or TTI) (for convenience, collectively referred to as a time unit (TU)) configured of the same number of symbols may be differently configured between the integrated cells.

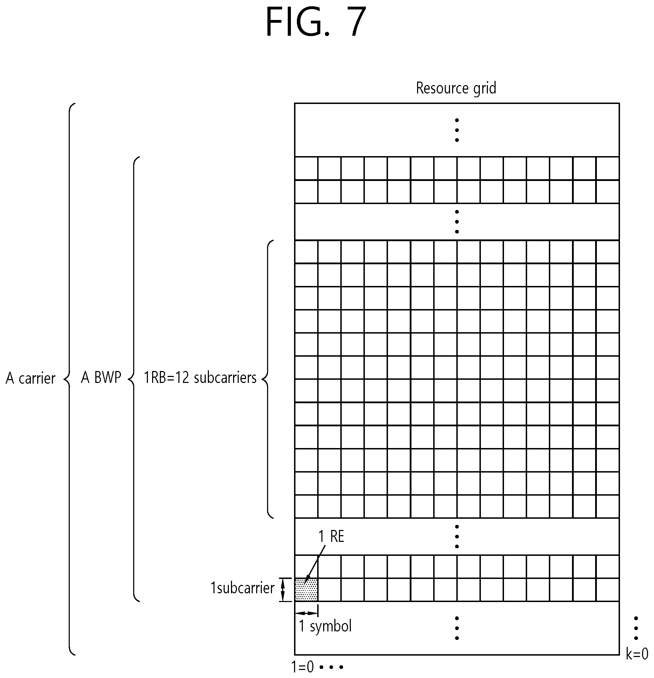

FIG. 7 illustrates a slot structure.

A slot may include a plurality of symbols in a time domain. For example, in case of a normal CP, one slot may include 14 symbols (or 7 symbols). However, in case of an extended CP, one slot may include 12 symbols (or 6 symbols). A carrier may include a plurality of subcarriers in a frequency domain. A resource block (RB) may be defined as a plurality of consecutive subcarriers (e.g., 12 subcarriers) in the frequency domain. A bandwidth part (BWP) may be defined as a plurality of consecutive (physical) resource blocks ((P)RBs) in the frequency domain, and the BWP may correspond to one numerology (e.g., SCS, CP length, and so on). The carrier may include up to N (e.g., 5) BWPs. Data communication may be performed via an active BWP, and only one BWP may be activated for one UE. In a resource grid, each element may be referred to as a resource element (RE), and one complex symbol may be mapped thereto.

A physical downlink control channel (PDCCH) may include one or more control channel elements (CCEs) as illustrated in the following table 3.

**[Table 3]**

| **Aggregation level** | **Number of CCEs** |
|---|---|
| 1 | 1 |
| 2 | 2 |
| 4 | 4 |
| 8 | 8 |
| 16 | 16 |

That is, the PDCCH may be transmitted through a resource including 1, 2, 4, 8, or 16 CCEs. Here, the CCE includes six resource element groups (REGs), and one REG includes one resource block in a frequency domain and one orthogonal frequency division multiplexing (OFDM) symbol in a time domain.

Monitoring implies decoding of each PDCCH candidate according to a downlink control information (DCI) format. The UE monitors a set of PDCCH candidates in one or more CORESETs (to be described below) on an active DL BWP of each activated serving cell in which PDCCH monitoring is configured, according to a corresponding search space set.

A new unit called a control resource set (CORESET) may be introduced in the NR. The UE may receive a PDCCH in the CORESET.

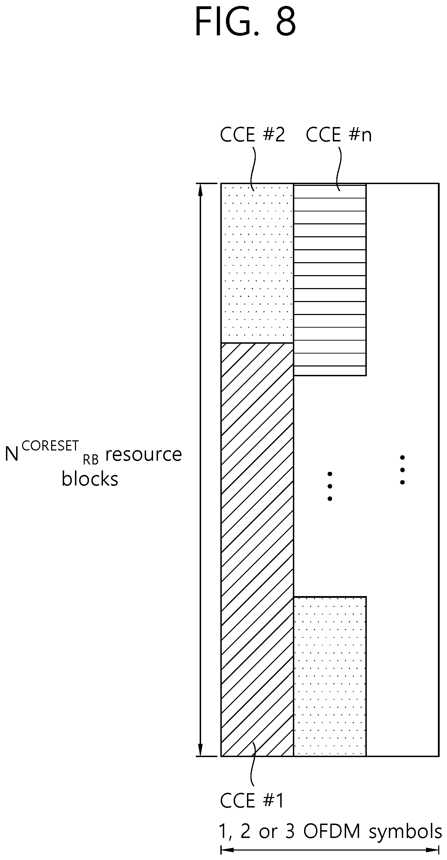

FIG. 8 illustrates CORESET.

Referring to FIG. 8, the CORESET includes N^{CORESET}_{RB} number of resource blocks in the frequency domain, and N^{CORESET}_{symb} ∈ {1, 2, 3} number of symbols in the time domain. N^{CORESET}_{RB} and N^{CORESET}_{symb} may be provided by a base station via higher layer signaling. As illustrated in FIG. 8, a plurality of CCEs (or REGs) may be included in the CORESET.

The UE may attempt to detect a PDCCH in units of 1, 2, 4, 8, or 16 CCEs in the CORESET. One or a plurality of CCEs in which PDCCH detection may be attempted may be referred to as PDCCH candidates.

A plurality of CORESETs may be configured for the UE.

A control region in the related art wireless communication system (e.g., LTE/LTE-A) is configured over the entire system band used by a base station (BS). All the UEs, excluding some (e.g., eMTC/NB-IoT UE) supporting only a narrow band, shall be able to receive wireless signals of the entire system band of the BS in order to properly receive/decode control information transmitted by the BS.

On the other hand, in NR, CORESET described above was introduced. CORESET is radio resources for control information to be received by the UE and may use only a portion, rather than the entirety of the system bandwidth. The BS may allocate the CORESET to each UE and may transmit control information through the allocated CORESET. In the NR, the UE may receive control information from the BS, without necessarily receiving the entire system band.

The CORESET may include a UE-specific CORESET for transmitting UE-specific control information and a common CORESET for transmitting control information common to all UEs.

On the other hand, NR may require high reliability depending on the application field. In this situation, the target block error rate (BLER) for downlink control information (DCI) transmitted through a downlink control channel (e.g., physical downlink control channel: PDCCH) may be significantly lower than that of the prior art. As an example of a method to satisfy the requirement for such high reliability, the amount of content included in DCI can be reduced and/or the amount of resources used when transmitting DCI can be increased. At this time, the resources may include at least one of resources in the time domain, resources in the frequency domain, resources in the code domain, and resources in the spatial domain.

In NR, the following technologies/features can be applied.

### <Self-contained subframe structure>

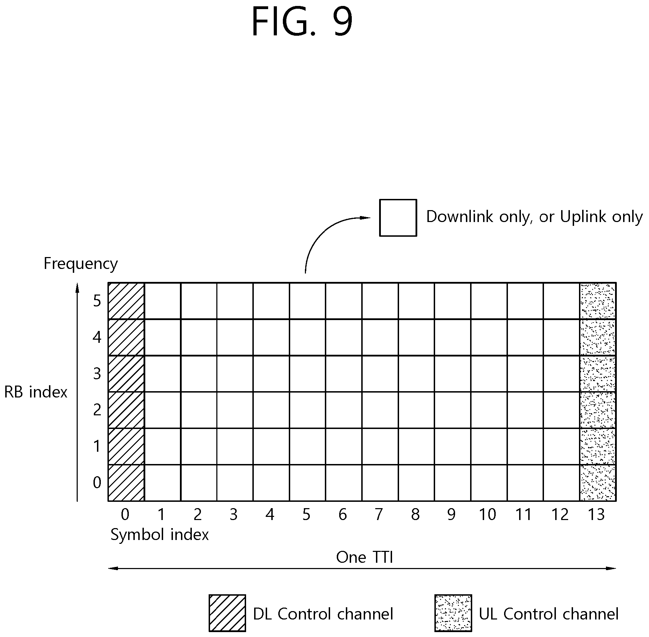

FIG. 9 shows an example of a frame structure for a new wireless access technology.

In NR, as shown in FIG. 9, a structure in which a control channel and a data channel are time-division-multiplexed within one TTI can be considered as a frame structure in order to minimize latency.

In FIG. 9, the hatched area represents the downlink control area, and the black portion represents the uplink control area. An unmarked area may be used for transmitting downlink data (DL data) or may be used for transmitting uplink data (UL data). The characteristic of this structure is that downlink (DL) transmission and uplink (UL) transmission proceed sequentially within one subframe, DL data can be transmitted within a subframe and UL ACK/NACK (Acknowledgement/Not-acknowledgement) can also be received. As a result, the time it takes to retransmit data when a data transmission error occurs is reduced, thereby minimizing the latency of final data transmission.

In this data and control TDMed subframe structure, a time gap for a base station and a UE to switch from a transmission mode to a reception mode or from the reception mode to the transmission mode may be required. To this end, some OFDM symbols at a time when DL switches to UL may be set to a guard period (GP) in the self-contained subframe structure.

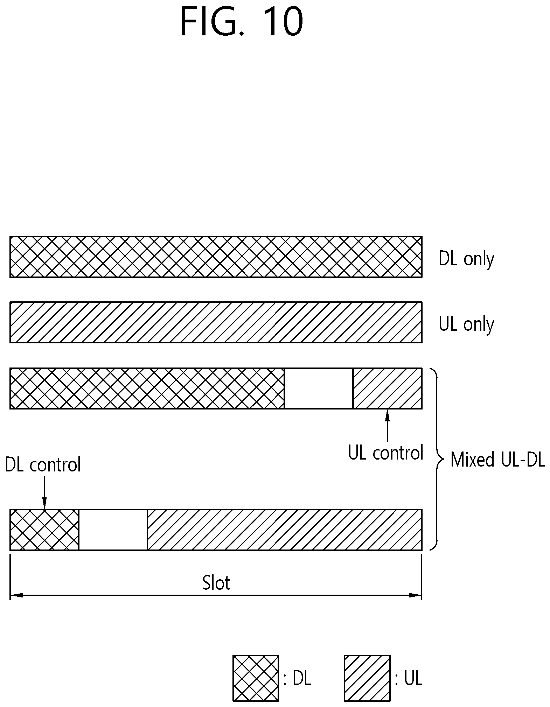

FIG. 10 illustrates a structure of a self-contained slot.

In an NR system, a DL control channel, DL or UL data, a UL control channel, and the like may be contained in one slot. For example, first N symbols (hereinafter, DL control region) in the slot may be used to transmit a DL control channel, and last M symbols (hereinafter, UL control region) in the slot may be used to transmit a UL control channel. N and M are integers greater than or equal to 0. A resource region (hereinafter, a data region) which exists between the DL control region and the UL control region may be used for DL data transmission or UL data transmission. For example, the following configuration may be considered. Respective durations are listed in a temporal order.
1. DL only configuration,
2. UL only configuration,
3. Mixed UL-DL configuration:
   DL region + Guard period (GP) + UL control region,
   DL control region + GP + UL region.

DL region: (i) DL data region, (ii) DL control region + DL data region.

UL region: (i) UL data region, (ii) UL data region + UL control region.

A PDCCH may be transmitted in the DL control region, and a physical downlink shared channel (PDSCH) may be transmitted in the DL data region. A physical uplink control channel (PUCCH) may be transmitted in the UL control region, and a physical uplink shared channel (PUSCH) may be transmitted in the UL data region. Downlink control information (DCI), for example, DL data scheduling information, UL data scheduling information, and the like, may be transmitted on the PDCCH. Uplink control information (UCI), for example, ACK/NACK information about DL data, channel state information (CSI), and a scheduling request (SR), may be transmitted on the PUCCH. A GP provides a time gap in a process in which a BS and a UE switch from a TX mode to an RX mode or a process in which the BS and the UE switch from the RX mode to the TX mode. Some symbols at the time of switching from DL to UL within a subframe may be configured as the GP.

### <Analog beamforming #1>

Wavelengths are shortened in millimeter wave (mmW) and thus a large number of antenna elements can be installed in the same area. That is, the wavelength is 1 cm at 30 GHz and thus a total of 100 antenna elements can be installed in the form of a 2-dimensional array at an interval of 0.5 lambda (wavelength) in a panel of 5×5 cm. Accordingly, it is possible to increase a beamforming (BF) gain using a large number of antenna elements to increase coverage or improve throughput in mmW.

In this case, if a transceiver unit (TXRU) is provided to adjust transmission power and phase per antenna element, independent beamforming per frequency resource can be performed. However, installation of TXRUs for all of about 100 antenna elements decreases effectiveness in terms of cost. Accordingly, a method of mapping a large number of antenna elements to one TXRU and controlling a beam direction using an analog phase shifter is considered. Such analog beamforming can form only one beam direction in all bands and thus cannot provide frequency selective beamforming.

Hybrid beamforming (BF) having a number B of TXRUs which is smaller than Q antenna elements can be considered as an intermediate form of digital BF and analog BF. In this case, the number of directions of beams which can be simultaneously transmitted are limited to B although it depends on a method of connecting the B TXRUs and the Q antenna elements.

### <Analog beamforming #2>

When a plurality of antennas is used in NR, hybrid beamforming which is a combination of digital beamforming and analog beamforming is emerging. Here, in analog beamforming (or RF beamforming) an RF end performs precoding (or combining) and thus it is possible to achieve the performance similar to digital beamforming while reducing the number of RF chains and the number of D/A (or A/D) converters. For convenience, the hybrid beamforming structure may be represented by N TXRUs and M physical antennas. Then, the digital beamforming for the L data layers to be transmitted at the transmitting end may be represented by an N by L matrix, and the converted N digital signals are converted into analog signals via TXRUs, and analog beamforming represented by an M by N matrix is applied.

System information of the NR system may be transmitted in a broadcasting manner. In this case, in one symbol, analog beams belonging to different antenna panels may be simultaneously transmitted. A scheme of introducing a beam RS (BRS) which is a reference signal (RS) transmitted by applying a single analog beam (corresponding to a specific antenna panel) is under discussion to measure a channel per analog beam. The BRS may be defined for a plurality of antenna ports, and each antenna port of the BRS may correspond to a single analog beam. In this case, unlike the BRS, a synchronization signal or an xPBCH may be transmitted by applying all analog beams within an analog beam group so as to be correctly received by any UE.

In the NR, in a time domain, a synchronization signal block (SSB, or also referred to as a synchronization signal and physical broadcast channel (SS/PBCH)) may consist of 4 OFDM symbols indexed from 0 to 3 in an ascending order within a synchronization signal block, and a PBCH associated with a primary synchronization signal (PSS), secondary synchronization signal (SSS), and demodulation reference signal (DMRS) may be mapped to the symbols. As described above, the synchronization signal block may also be represented by an SS/PBCH block.

In NR, since a plurality of synchronization signal blocks(SSBs) may be transmitted at different times, respectively, and the SSB may be used for performing initial access (IA), serving cell measurement, and the like, it is preferable to transmit the SSB first when transmission time and resources of the SSB overlap with those of other signals. To this purpose, the network may broadcast the transmission time and resource information of the SSB or indicate them through UE-specific RRC signaling.

In NR, beams may be used for transmission and reception. If reception performance of a current serving beam is degraded, a process of searching for a new beam through the so-called Beam Failure Recovery (BFR) may be performed.

Since the BFR process is not intended for declaring an error or failure of a link between the network and a UE, it may be assumed that a connection to the current serving cell is retained even if the BFR process is performed. During the BFR process, measurement of different beams (which may be expressed in terms of CSI-RS port or Synchronization Signal Block (SSB) index) configured by the network may be performed, and the best beam for the corresponding UE may be selected. The UE may perform the BFR process in a way that it performs an RACH process associated with a beam yielding a good measurement result.

Now, a transmission configuration indicator (hereinafter, TCI) state will be described. The TCI state may be configured for each CORESET of a control channel, and may determine a parameter for determining an RX beam of the UE, based on the TCI state.

For each DL BWP of a serving cell, a UE may be configured for three or fewer CORESETs. Also, a UE may receive the following information for each CORESET.
1) CORESET index p (one of 0 to 11, where index of each CORESET may be determined uniquely among BWPs of one serving cell),
2) PDCCH DM-RS scrambling sequence initialization value,
3) Duration of a CORESET in the time domain (which may be given in symbol units),
4) Resource block set,
5) CCE-to-REG mapping parameter,
6) Antenna port quasi co-location indicating quasi co-location (QCL) information of a DM-RS antenna port for receiving a PDCCH in each CORESET (from a set of antenna port quasi co-locations provided by a higher layer parameter called 'TCI-State'),
7) Indication of presence of Transmission Configuration Indication (TCI) field for a specific DCI format transmitted by the PDCCH in the CORESET, and so on.

QCL will be described. If a characteristic of a channel through which a symbol on one antenna port is conveyed can be inferred from a characteristic of a channel through which a symbol on the other antenna port is conveyed, the two antenna ports are said to be quasi co-located (QCLed). For example, when two signals A and B are transmitted from the same transmission antenna array to which the same/similar spatial filter is applied, the two signals may go through the same/similar channel state. From a perspective of a receiver, upon receiving one of the two signals, another signal may be detected by using a channel characteristic of the received signal.

In this sense, when it is said that the signals A and B are quasi co-located (QCLed), it may mean that the signals A and B have went through a similar channel condition, and thus channel information estimated to detect the signal A is also useful to detect the signal B. Herein, the channel condition may be defined according to, for example, a Doppler shift, a Doppler spread, an average delay, a delay spread, a spatial reception parameter, or the like.

A 'TCI-State' parameter associates one or two downlink reference signals to corresponding QCL types (QCL types A, B, C, and D, see Table 4).

**[Table 4]**

| QCL Type | Description |
|---|---|
| QCL-TypeA | Doppler shift, Doppler spread, Average delay, Delay spread |
| QCL-TypeB | Doppler shift, Doppler spread |
| QCL-TypeC | Doppler shift, Average delay |
| QCL-TypeD | Spatial Rx parameter |

Each 'TCI-State' may include a parameter for configuring a QCL relation between one or two downlink reference signals and a DM-RS port of a PDSCH (or PDCCH) or a CSI-RS port of a CSI-RS resource.

Meanwhile, for each DL BWP configured to a UE in one serving cell, the UE may be provided with 10 (or less) search space sets. For each search space set, the UE may be provided with at least one of the following information.

1) search space set index s (0≤s<40), 2) an association between a CORESET p and the search space set s, 3) a PDCCH monitoring periodicity and a PDCCH monitoring offset (slot unit), 4) a PDCCH monitoring pattern within a slot (e.g., indicating a first symbol of a CORSET in a slot for PDCCH monitoring), 5) the number of slots in which the search space set s exists, 6) the number of PDCCH candidates per CCE aggregation level, 7) information indicating whether the search space set s is CSS or USS.

In the NR, a CORESET#0 may be configured by a PBCH (or a UE-dedicated signaling for handover or a PSCell configuration or a BWP configuration). A search space (SS) set#0 configured by the PBCH may have monitoring offsets (e.g., a slot offset, a symbol offset) different for each associated SSB. This may be required to minimize a search space occasion to be monitored by the UE. Alternatively, this may be required to provide a beam sweeping control/data region capable of performing control/data transmission based on each beam so that communication with the UE is persistently performed in a situation where a best beam of the UE changes dynamically.

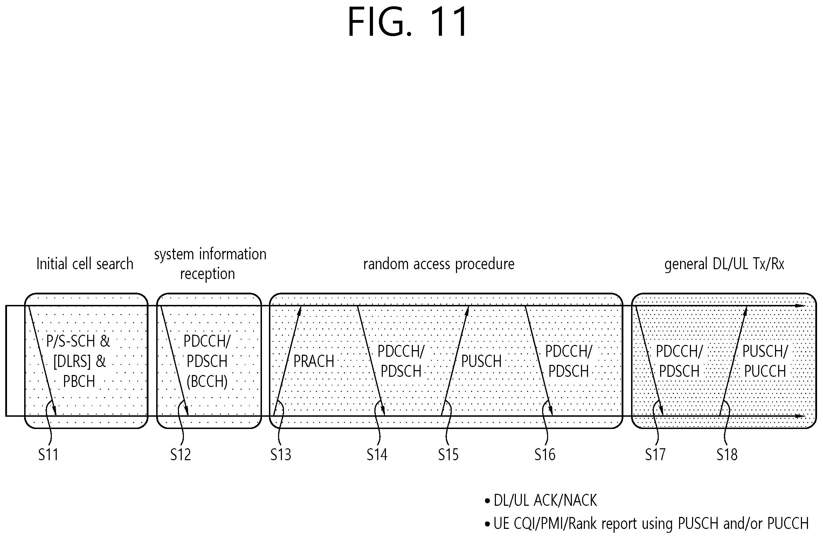

FIG. 11 illustrates physical channels and typical signal transmission.

Referring to FIG. 11, in a wireless communication system, a UE receives information from a BS through a downlink (DL), and the UE transmits information to the BS through an uplink (UL). The information transmitted/received by the BS and the UE includes data and a variety of control information, and there are various physical channels according to a type/purpose of the information transmitted/received by the BS and the UE.

The UE which is powered on again in a power-off state or which newly enters a cell performs an initial cell search operation such as adjusting synchronization with the BS or the like (S11). To this end, the UE receives a primary synchronization channel (PSCH) and a secondary synchronization channel (SSCH) from the BS to adjust synchronization with the BS, and acquire information such as a cell identity (ID) or the like. In addition, the UE may receive a physical broadcast channel (PBCH) from the BS to acquire broadcasting information in the cell. In addition, the UE may receive a downlink reference signal (DL RS) in an initial cell search step to identify a downlink channel state.

(Initial) cell search can be said to be a procedure in which the UE obtains time and frequency synchronization with a cell and detects the cell ID of the cell. Cell search may be based on the cell's primary synchronization signal and secondary synchronization signal, and PBCH DMRS.

Upon completing the initial cell search, the UE may receive a physical downlink control channel (PDCCH) and a physical downlink control channel (PDSCH) corresponding thereto to acquire more specific system information (S12).

Thereafter, the UE may perform a random access procedure to complete an access to the BS (S13 ~ S16). Specifically, the UE may transmit a preamble through a physical random access channel (PRACH) (S13), and may receive a random access response (RAR) for the preamble through a PDCCH and a PDSCH corresponding thereto (S14). Thereafter, the UE may transmit a physical uplink shared channel (PUSCH) by using scheduling information in the RAR (S15), and may perform a contention resolution procedure similarly to the PDCCH and the PDSCH corresponding thereto (this can be said to be the process of receiving a competition resolution message) (S16).

After performing the aforementioned procedure, the UE may perform PDCCH/PDSCH reception (S17) and PUSCH/physical uplink control channel (PUCCH) transmission (S18) as a typical uplink/downlink signal transmission procedure. Control information transmitted by the UE to the BS is referred to as uplink control information (UCI). The UCI includes hybrid automatic repeat and request (HARQ) acknowledgement (ACK)/negative-ACK (NACK), scheduling request (SR), channel state information (CSI), or the like. The CSI includes a channel quality indicator (CQI), a precoding matrix indicator (PMI), a rank indication (RI), or the like. In general, the UCI is transmitted through the PUCCH. However, when control information and data are to be transmitted simultaneously, the UCI may be transmitted through the PUSCH. In addition, the UE may aperiodically transmit the UCI through the PUSCH according to a request/indication of a network.

In order to enable reasonable battery consumption when bandwidth adaptation (BA) is configured, only one uplink BWP and one downlink BWP or only one downlink/uplink BWP pair for each uplink carrier may be activated at once in an active serving cell, and all other BWPs configured in the UE are deactivated. In the deactivated BWPs, the UE does not monitor the PDCCH, and does not perform transmission on the PUCCH, PRACH, and UL-SCH.

For the BA, RX and TX bandwidths of the UE are not necessarily as wide as a bandwidth of a cell, and may be adjusted. That is, it may be commanded such that a width is changed (e.g., reduced for a period of low activity for power saving), a position in a frequency domain is moved (e.g., to increase scheduling flexibility), and a subcarrier spacing is changed (e.g., to allow different services). A subset of the entire cell bandwidth of a cell is referred to as a bandwidth part (BWP), and the BA is acquired by configuring BWP(s) to the UE and by notifying the UE about a currently active BWP among configured BWPs. When the BA is configured, the UE only needs to monitor the PDCCH on one active BWP. That is, there is no need to monitor the PDCCH on the entire downlink frequency of the cell. A BWP inactive timer (independent of the aforementioned DRX inactive timer) is used to switch an active BWP to a default BWP. That is, the timer restarts when PDCCH decoding is successful, and switching to the default BWP occurs when the timer expires.

Hereinafter, an integrated access and backhaul link (IAB) will be described. Hereinafter, for convenience of description, a proposed method will be described based on a new RAT (NR) system. However, the range of the system to which the proposed method is applied is expandable to other systems such as 3GPP LTE/LTE-A systems in addition to the NR system.

One of the potential technologies aimed at enabling future cellular network deployment scenarios and applications is support for wireless backhaul and relay links, and it enables flexible and highly dense deployment of NR cells without the need to proportionally densify the transport network.

It is expected that greater bandwidth in NR compared to LTE will be available (e.g., mmWave spectrum) with the native deployment of massive MIMO or multi-beam systems, thus, occasions are created for the development and deployment of integrated access and backhaul links. This makes it easier of a dense network of self-backhauled NR cells in a more integrated manner by establishing multiple control and data channels/procedures defined to provide access or access to the UEs. Such systems are referred to as integrated access and backhaul links (IAB).

This disclosure defines the following.
- AC (x): an access link between the node (x) and the UE(s).
- BH (xy): a backhaul link between the node (x) and the node (y).

In this case, the node may mean a donor gNB (DgNB) or a relay node (RN). Here, the DgNB or the donor node may be a gNB that provides a function to support backhaul to IAB nodes.

When relay node 1 and relay node 2 exist, relay node 1 which is connected to relay node 2 by a backhaul link and relaying data transmitted and received to relay node 2 is called a parent node of relay node 2, and relay node 2 is called a child node of relay node 1.

Technical features described individually in one drawing in this specification may be implemented individually or simultaneously.

The following drawings were prepared to explain a specific example of the present specification. Since the names of specific devices or specific signals/messages/fields described in the drawings are provided as examples, the technical features of this specification are not limited to the specific names used in the drawings below.

Now, full duplex operation will be described.

In 5G, new service types such as extended reality (XR), artificial intelligence-based service, and self-driving car are emerging. These services have characteristics that dynamically change traffic in both downlink (DL) and uplink (UL) directions, and require low latency for traffic (e.g., packets) to be transmitted. In 5G services, traffic will increase explosively to support these various new use cases.

Existing semi-static or dynamic TDD UL/DL configurations have limitations such as transmission time delay and interference between operators. The existing FDD method has limitations in terms of efficient frequency resource utilization in the DL/UL direction. Therefore, for low latency and efficient resource utilization in NR, the introduction of full duplex operation within a single carrier is being discussed.

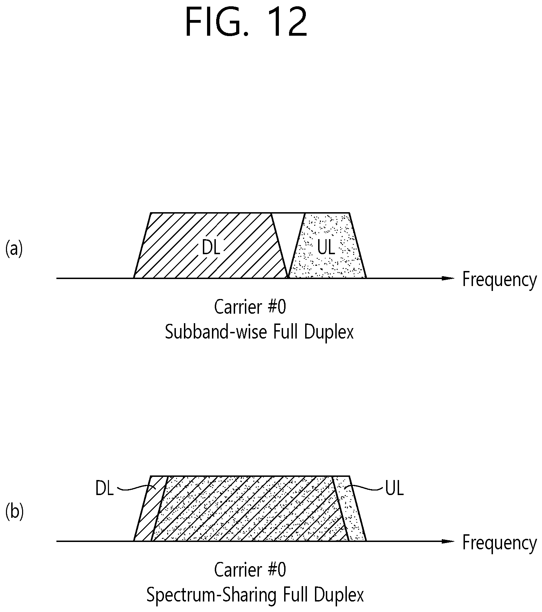

FIG. 12 shows examples of how to apply full duplex within an intra-carrier.

Referring to FIG. 12, the full duplex method includes subband-wise full duplex (hereinafter referred to as subband full duplex or SBFD) as shown in (a) of FIG. 12 and spectrum sharing full duplex (hereinafter referred to as SSFD as shown in (b) of FIG. 12 may be considered.

In the case of SBFD, DL and UL transmission and reception can be performed through different frequency resources in the same time resource within the same carrier (e.g., carrier #0). That is, different frequency resources can be used in the DL and the UL for the same time resource.

In the case of SSFD, DL and UL transmission and reception can be performed through the same frequency resource or overlapped frequency resources in the same time resource within the same carrier (e.g., carrier #0). That is, the same or overlapped frequency resources can be used in the DL and the UL for the same time resource.

This full-duplex (FD) operation can also be used in combination with the existing half-duplex (HD) operation. For example, among time resources used for existing half-duplex-based TDD operation, some time resources may be used for full duplex operation. SBFD or SSFD operations can be performed on time resources that perform full duplex operations.

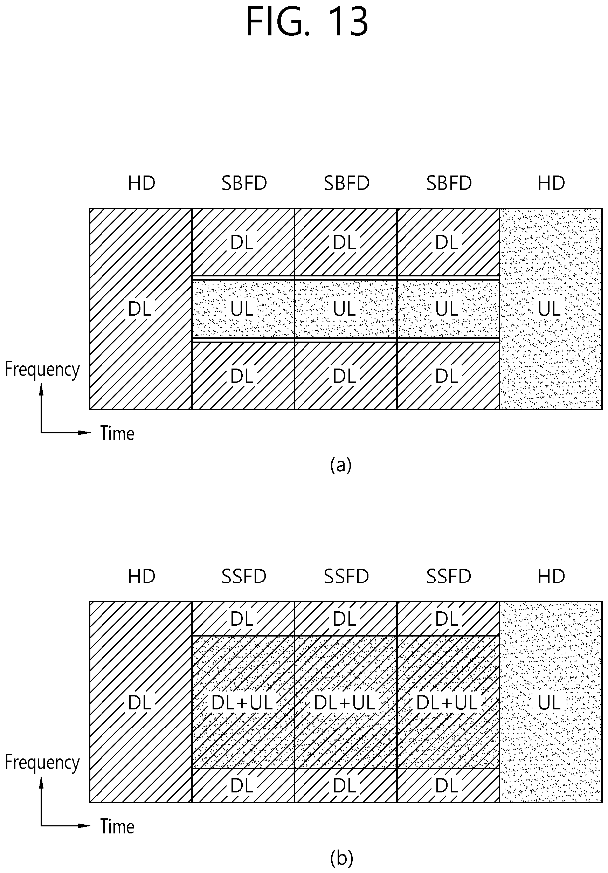

FIG. 13 shows an example in which a time resource operating in half duplex (HD) and a time resource operating in full duplex (FD) such as SBFD or SSFD exist together.

In (a) of FIG. 13, some time resources operating as SBFD are indicated as SBFD, and time resources operating as HD are indicated as HD. In (b) of FIG. 13, some time resources operating as SSFD are indicated as SSFD, and time resources operating as HD are indicated as HD. The unit of time resource may be, for example, a slot or symbol. That is, (a) and (b) of FIG. 13 can be interpreted as examples in which five slots or five symbols exist on the time axis.

In time resources operating as SBFD, some frequency resources are used as DL resources, and other frequency resources are used as UL resources. Between the DL frequency resource and the UL frequency resource, there may be a guard subband that is unused and empty for both DL and UL. Guard subbands may also be referred to by other terms, such as guard frequency resources or guard subcarrier(s).

In time resources operating with SSFD, the entire frequency resource can be used for both DL and UL. Or, to reduce the impact of interference from other adjacent carriers (this may be referred to as ACI (adjacent carrier interference)), Some frequency resources at one or both ends of the carrier may not be used for DL and/or UL. That is, one or both ends of the carrier can be used as an unused guard band (guard subband) for both DL and UL. Alternatively, to reduce ACI on UL reception, one or both ends of the carrier may be used only for DL transmission.

In this disclosure, a slot resource that operate as HD is referred to as a HD slot, and a slot resource that operate as SBFD and a slot resource that operate as SSFD are referred to as a SBFD slot and a SSFD slot, respectively. Additionally, the SBFD slot and the SSFD slot can be collectively referred to as FD slots.

In the present disclosure, in time resources operating in FD, among all frequency resources, frequency resources operating in DL are referred to as a DL subband, and frequency resources operating in UL are also referred to as an UL subband, for convenience.

In the case of full duplex operation, both the base station and the UE may perform full duplex operation. That is, both the base station and the UE may simultaneously perform DL and UL transmission and reception using the same or different frequency resources in the same time resource.

Alternatively, only the base station can perform full duplex operation and the UE may perform half duplex operation. The base station can simultaneously perform transmission and reception of DL and UL using the same or different frequency resources in the same time resource, but the UE only performs DL reception or UL transmission in a specific time resource. In this case, the base station performs full duplex operation by performing DL transmission and UL reception with different UEs at the same time.

The content of the present disclosure is described assuming that the base station performs/supports a full duplex operation, but the UE performs/supports a half duplex operation. However, the content of the present disclosure can be applied even when both the base station and the UE perform/support full duplex operation.

Based on the discussion as described above, the present disclosure proposes a method of operating by falling back to TDD in time resources operating in SBFD during an intra-carrier full duplex operation.

In the following, the term network may be interpreted as base station or CU/DU. The term UE(terminal) may also be interpreted as a mobile terminal (MT) of an IAB node or a MT of a network-controlled repeater (NCR-MT).

### A. Characteristics of DL/UL time/frequency resources for SBFD and SSFD operation

A cell (base station) can perform both DL transmission and UL reception in the same time resource in an FD scheme such as SBFD or SSFD. For example, the base station may perform HD operation in a first time resource and FD operation in a second time resource (which may be a time resource other than the first time resource).

The first time resource performing HD operation performs DL operation or UL operation across the frequency resources that comprise the entire system bandwidth. Within the first time resource performing the HD operation, the network performs the DL operation through the 1-1 time resource and the UL operation through the 1-2 time resource. At this time, the 1-1 time resource and the 1-2 time resource do not overlap with each other.

In the second time resource performing the FD operation, the network performs DL operations through all or part of the frequency resources (first frequency resources) among the frequency resources that constitute the system band of the cell, and performs UL operations through all or part of the frequency resources (second frequency resources).

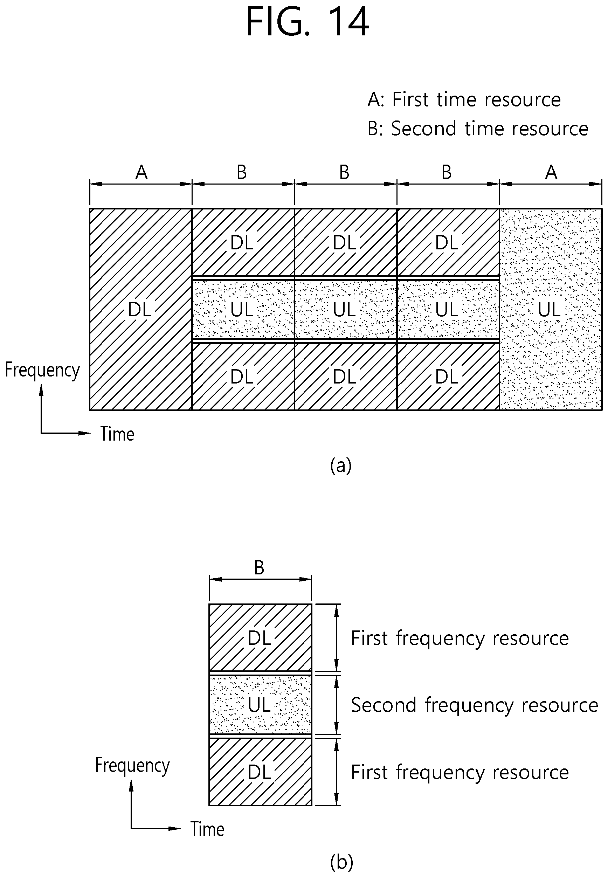

FIG. 14 shows examples of a first time resource, a second time resource, a first frequency resource, and a second frequency resource.

Referring to (a) of FIG. 14, in the first time resource (represented by A), the device operates in HD. In the second time resource (represented by B), for example, the device can operate as SBFD. In the first time resource, the resource indicated by DL corresponds to the above-described 1-1 time resource, and the resource indicated by UL corresponds to the above-described 1-2 time resource.

Referring to (b) of FIG. 14, in the second time resource, the frequency resource operating as DL corresponds to the above-described first frequency resource, and the frequency resource operating as UL corresponds to the above-described second frequency resource.

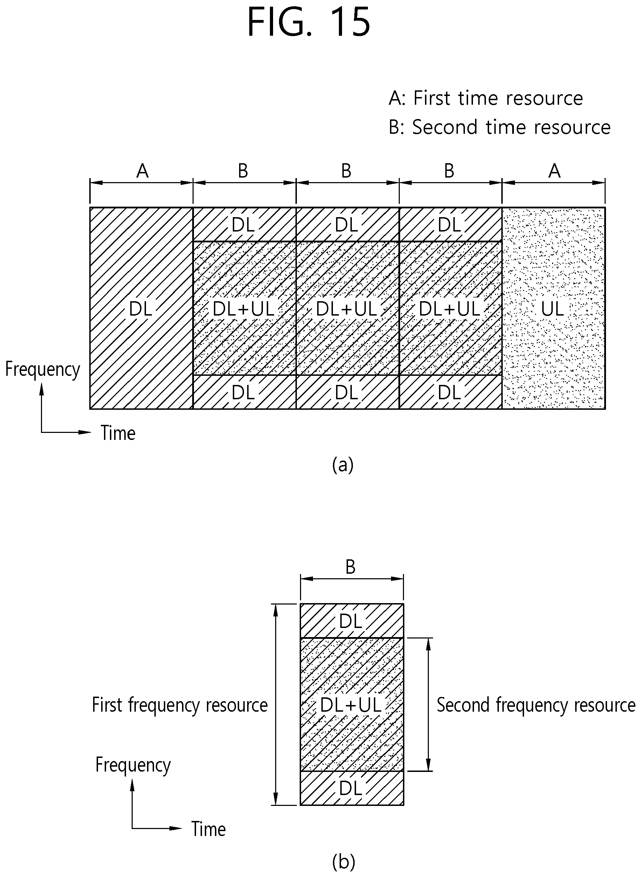

FIG. 15 shows another example of a first time resource, a second time resource, a first frequency resource, and a second frequency resource.

Referring to (a) of FIG. 15, in the first time resource (denoted by A), the device operates as a half-duplex. In the second time resource (labelled B), the device may operate, for example, as an SSFD. In the first time resource, the resource denoted DL corresponds to the first time resource described above, and the resource denoted UL corresponds to the second time resource described above.

Referring to (b) of FIG. 15, in the second time resource, the frequency resources operating as DL and DL+UL correspond to the first frequency resource described above, and the frequency resources operating as DL+UL correspond to the second frequency resource described above.

The first frequency resource and/or the second frequency resource may have all or some of the following characteristics.
1) When performing SBFD operation, the first frequency resource and the second frequency resource do not overlap with each other. This is to ensure that DL and UL operations are performed through different frequency resources. At this time, there may be frequency resources that do not correspond to both the first and second frequency resources, and these frequency resources are called guard subbands or guard frequency resources. These guard frequency resources may be needed to reduce interference from DL transmission on UL reception. The guard frequency resource may be located between the first frequency resource and the second frequency resource.
2) When performing SSFD operation, the first frequency resource and the second frequency resource may overlap. At this time, there may be frequency resources that do not correspond to both the first and second frequency resources, and these frequency resources are called guard subbands or guard frequency resources. These guard frequency resources may be needed to reduce interference from DL transmission on adjacent carriers to UL reception and/or to reduce interference from DL transmission on UL reception on adjacent carriers.
3) When performing an SBFD operation, the second frequency resource may be composed of contiguous frequency resources, and the first frequency resource may be composed of non-contiguous frequency resources. In this case, the first frequency resource may comprise a plurality of discontiguous sets (e.g., two), each of which may comprise a contiguous frequency resource. This is to reduce interference from DL transmission on adjacent carriers to UL resources by placing the second frequency resource used for UL at the center of the frequency resources constituting the cell. Conversely, the first frequency resource may be composed of contiguous frequency resources, and the second frequency resource may be composed of non-contiguous frequency resources. In this case, the second frequency resource may comprise a plurality of discontiguous sets (e.g., two), each of which may comprise a contiguous frequency resource. This is to reduce interference from DL transmission on UL resources in adjacent carriers by placing the second frequency resource used for DL at the center of the frequency resources constituting the cell.
4) When performing SSFD operation, the second frequency resource may be composed of some frequency resources of the first frequency resource. At this time, the second frequency resource may be configured to have fewer X physical resource blocks (PRBs) on one or both edges of the carrier than the first frequency resource. This is to reduce interference from DL transmission on adjacent carriers to UL reception.

The network determines the 'first time resource' and 'second time resource', and the 'first frequency resource' and 'second frequency resource' as described above, and provides all or part of the corresponding information to the UE.

For the FD (SBFD and/or SSFD) operation of the cell, the UE may determine information about the time resources (hereinafter referred to as SBFD symbols) that operate as SBFD (and/or SSFD). For this purpose, information about the SBFD symbol may be set to the UE from the network.

When a specific time resource is set as a time resource operating in SBFD (SBFD symbol), both DL and UL resources may exist in that time resource. In this case, if there is no UL signal for the base station to receive in that time resource, the base station can only perform DL transmissions. In SBFD resources, DL transmission is only within the DL subband. Therefore, even if there is no UL signal transmitted in the UL subband, DL transmission can only be performed within the DL subband.

In this case, if the base station has no UL transmissions to receive, even if the specific time resource is a resource determined to be SBFD symbol, it may consider performing DL transmissions outside the DL subband as well as in the DL subband to improve DL throughput. That is, it may consider performing DL transmissions in the full band.

That is, in resources determined to be SBFD symbols, it can consider a fallback to TDD operation where DL or UL operation is performed over the full band, rather than SBFD operation over DL/UL subbands.

The UE may perform the same TDD operation (half duplex operation) as an existing UE in resources that are not determined to be SBFD symbols. That is, only DL or UL operations can be performed using all frequency resources of the cell.

In the case of a fallback operation, a transition between the SBFD time resource and the non-SBFD time resource may occur more frequently compared to a case where the fallback operation is not performed. Then, due to this, a problem may occur in which operational complexity of a base station and the UE and overhead due to a transition period increase.

In the present disclosure, a time resource operating as SBFD or an SBFD symbol may mean a 'second time resource'. Additionally, in this disclosure, a time resource operating in TDD, a time resource operating in HD, a TDD symbol, or an HD symbol may mean a 'first time resource'.

The DL subband referred to in this disclosure may mean the 'first frequency resource'. Additionally, the UL subband mentioned in this disclosure may mean the 'second frequency resource'.

This disclosure assumes SBFD operation where a cell performs DL and UL simultaneously using different frequency resources (e.g., subbands) in the same time resource. However, the content of this disclosure may also be applicable when the cell performs SSFD operation.

This disclosure may include the following UE operations.

When the UE performs DL reception in an SBFD symbol, i) the UE may perform DL reception using frequency resources within the DL subband. The UE may perform DL reception using frequency resources within the DL subband within the DL BWP. ii) The UE does not perform DL reception on frequency resources outside the DL subband. The UE does not perform DL reception using frequency resources outside the DL subband within the DL BWP.

If the UE performs UL transmission on SBFD symbols, i) the UE may use frequency resources within the UL subband to perform UL transmission. The UE may use frequency resources within the UL subband to perform UL transmission within the UL BWP. ii) The UE does not perform UL transmission on frequency resources other than the UL subband. The UE does not perform UL transmission using frequency resources other than the UL subband within the UL BWP.

In general, the UE may perform DL reception within the DL subband and UL transmission within the UL subband in time resources for which the cell is determined to operate in SBFD. However, in the case where the gNB (base station) only performs DL transmission or UL reception in the time resources for which the cell is determined to operate as SBFD, or, if necessary, performs DL transmission or UL reception through the entire band (can receive DL or UL scheduling) can be considered.

In existing TDD carriers of NR, a base station performs only one of a DL or a UL operation in a specific time resource. At this time, the base station always operates in the DL in time resources where an SS/PBCH is transmitted.

In a case of a UE operating in existing TDD, the following is assumed for symbols in which the SS/PBCH is transmitted.
1) SS/PBCH transmission symbols cannot be configured as the UL by TDD configuration (e.g., TDD-UL-DL-ConfigCommon and/or TDD-UL-DL-ConfigDedicated).
2) SS/PBCH transmission symbols cannot be configured as the UL by an SFI (slot format indication) of DCI format 2 0.
3) In a case where the SS/PBCH is transmitted in symbols configured as Flexible by the TDD configuration (e.g., TDD-UL-DL-ConfigCommon and/or TDD-UL-DL-ConfigDedicated), if a UL transmission of the UE overlaps with the corresponding SS/PBCH symbol, the corresponding UL transmission is not performed. For example, if a transmission of an SRS overlaps with the SS/PBCH symbol in a Flexible symbol, the SRS transmission is not performed in the overlapped symbol(s).

Meanwhile, in an FDR environment such as SBFD and SSFD, both DL and UL resources can exist in the same time resource from a viewpoint of a cell (network, base station). Accordingly, the base station can transmit the DL while simultaneously performing the UL reception.

Therefore, even in a case where the SS/PBCH is transmitted in a time resource in which the cell performs an FDR operation, the base station can perform reception of the UL transmission of the UE while transmitting the SS/PBCH.

Meanwhile, according to current standards, the UE cannot perform the UL transmission in symbol resources in which the SS/PBCH is transmitted by the network. That is, the UE cannot perform the FDR operation in the SS/PBCH transmission time resources.

In a case where a specific time resource is configured as a time resource operating in SBFD, both a DL resource and a UL resource exist in the corresponding time resource. At this time, if there is no UL signal to be received by the base station in the corresponding time resource, the base station can perform only the DL transmission. In an SBFD resource, the DL transmission of the base station is performed only within a DL subband. That is, even in a case where there is no UL signal transmitted by the UE in a UL subband, the DL transmission can be performed only within the DL subband.

Even if a specific time resource is a resource determined as an SBFD symbol, in a case where there is no UL transmission of the UE to be received by the base station, performing the DL transmission by the base station not only in the DL subband but also outside the DL subband for improving DL throughput may be considered. That is, performing the DL transmission through a full band may be considered.

In other words, in a resource determined as the SBFD symbol, performing fallback to a TDD operation for performing a DL or a UL operation through the full band, rather than an SBFD operation through the DL/UL subbands, may be considered.

In the present disclosure, a time resource operating as the SBFD or the SBFD symbol may mean a 'second time resource'. In addition, in the present disclosure, a time resource operating as the TDD, a time resource operating as an HD, a TDD symbol, or an HD symbol may mean a 'first time resource'.

Considering this, the present disclosure describes a method of operating by falling back to the TDD in the time resources operating as the SBFD during an intra-carrier full duplex operation.

The present disclosure is described assuming the SBFD operation in which the cell simultaneously performs the DL and the UL using different frequency resources (e.g., subbands) in the same time resource. However, contents of the present disclosure can also be applied to a case where the cell performs an SSFD operation.

The base station may perform a full duplex operation and the UE may perform a half duplex operation, or the base station may perform the half duplex operation and the UE may perform the full duplex operation. Alternatively, both the base station and the UE may support the full duplex operation.

A UE that knows that the full duplex operation can be performed in the base station may be collectively referred to as an FD-aware UE hereinafter. A UE that knows that the base station can perform a subband non-overlapping full duplex (i.e., SBFD) operation may be collectively referred to as an SBFD-aware UE. A UE that knows that the base station can perform a spectrum shared (or subband overlapping) full duplex (i.e., SSFD) operation may be referred to as an SSFD-aware UE.

In a case where both the half duplex operation and the full duplex operation are supported by the base station, information on resources (time or frequency, or both time and frequency) in which the half duplex and the full duplex can be performed (or are expected to be performed, or are requested to be performed) can be provided to the UE.

In a case where the base station can perform the SSFD operation, in a case of a full duplex base station, UL reception is simultaneously possible in some of or all frequency resources in which DL transmission of the base station is possible. That is, in some frequency resources, not only the DL transmission/reception but also the UL reception/transmission may be possible. At this time, in a case of the SSFD, information on frequency resources where the SSFD is possible can be delivered to the UE. And information on time resources where the SSFD is possible can be delivered to the UE.

In a case of a full duplex UE, the UL transmission can be simultaneously possible in some of or all frequency resources in which DL reception of the UE is possible.

Although the following description describes a method for indicating information on time(/frequency) resources for performing the SBFD, this method can also be used for indicating time(/frequency) resources for performing the SSFD in a case where the base station is capable of the half duplex and the SSFD operations.

Generally, in time resources determined that the cell operates as the SBFD, the UE can perform the DL reception in the DL subband and perform the UL transmission in the UL subband.

However, in the time resources determined that the cell operates as the SBFD, in a case where the base station performs only the DL transmission or the UL reception (or as necessary), performing a conventional TDD operation (in which the DL or the UL scheduling can be received) for performing the DL transmission or the UL reception through the full band may be considered.

The present disclosure describes an operation in which, in the time resources determined that the cell operates as the SBFD, the UE performs the DL not only in the DL subband but also in frequency resources other than the DL subband, and/or performs the UL transmission not only in the UL subband but also in frequency resources other than the UL subband. Such an operation may be referred to as a TDD fallback operation (or simply a fallback operation) for convenience in the present disclosure.

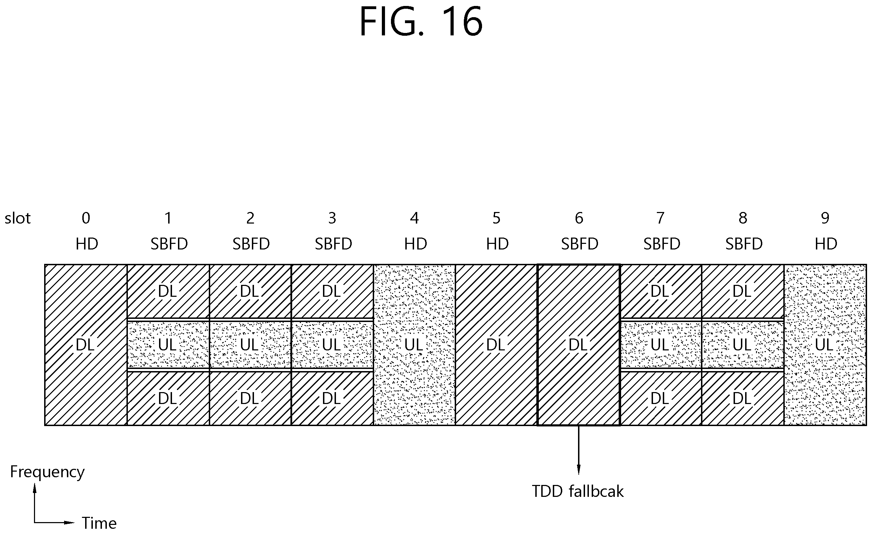

FIG. 16 illustrates a TDD fallback operation.

Referring to FIG. 16, for example, assume that a UE determines slots #0, #4, #5, and #9 as TDD (HD) slots and slots #1, #2, #3, #6, #7, and #8 as SBFD slots based on configuration information. At this time, a TDD fallback operation capable of performing DL reception (capable of receiving DL scheduling) through a full band can be performed in a specific SBFD time resource (slot #6 in FIG. 16).

The TDD fallback operation may specifically mean/comprise the following:

### 1) Dynamic SBFD and TDD switching

The TDD fallback operation may mean an operation of (dynamically) switching a time resource (semi-statically) configured as SBFD to a TDD time resource. That is, the time resource configured as SBFD can be semi-statically configured, and switching the SBFD time resource to the TDD time resource can be dynamically indicated. For example, SBFD time resources can be repeatedly configured with a certain period. Some of these SBFD time resources can be switched to a TDD time resource (or a non-SBFD time resource) by scheduling information such as DCI. In this case, a time resource performing the TDD fallback may mean a time resource (dynamically) switched to the TDD time resource.

Alternatively, it may mean dynamically determining/judging/changing whether to operate as SBFD or TDD for a specific time resource. That is, it may mean dynamically determining/judging/changing a time resource operating as SBFD and/or a time resource operating as TDD (i.e., non-SBFD). In this case, indicating TDD fallback operation resources/information may mean indicating (dynamic) information on a time resource operating as SBFD and/or a time resource operating as TDD (i.e., non-SBFD).

### 2) DL transmission permission in a non-DL subband (or UL subband)

The TDD fallback operation may mean an operation of allowing the UE to perform DL reception not only in a DL subband frequency resource but also in a 'frequency resource other than the DL subband' (or in a 'UL and/or guard subband resource') for a time (semi-statically) configured as SBFD. In this case, a time resource performing the TDD fallback may mean a time resource in which the UE performs the DL reception even in the 'frequency resource other than the DL subband' (or in the 'UL and/or guard subband resource'). That is, the time resource performing the TDD fallback may mean a time resource in which the UE can perform the DL reception in a full frequency band.

### 3) DL subband switching

The TDD fallback operation may mean operating by changing a DL subband size and position to a wideband for a time (semi-statically) configured as SBFD. Changing the DL subband size and position to the wideband may mean changing to full frequency resources within a full band of a system BW or a DL BWP. That is, all frequency resources within a system band can be determined as the DL subband. In this case, since the DL subband is switched to the full band, the UE can perform the DL in the all frequency resources. In this case, a time resource performing the TDD fallback may mean a time resource operating by changing the DL subband size and position to the wideband.

### 4) UL subband switching

The TDD fallback operation may mean operating by changing a UL subband size to 0 for a time (semi-statically) configured as SBFD. Changing the UL subband size to 0 may mean changing the full frequency resources within the full band of the system BW (band) or the DL BWP to the DL subband. That is, all frequency resources within the system band can be determined as the DL subband. In this case, since the UL subband size is switched to 0, the UE can perform the DL within the all frequency resources. In this case, a time resource performing the TDD fallback may mean a time resource operating by changing the UL subband size to 0.

The UE may determine whether a specific time resource is used for an SBFD operation or a TDD operation by an explicit base station configuration or by an implicit determination for the specific time resource.

At this time, in order to additionally support the TDD fallback operation for a time resource determined to perform the SBFD operation, the UE can determine the time resource performing the TDD fallback operation as follows.

In a cell performing the SBFD operation, a specific time resource (e.g., symbol(s), slot(s)) can be used for the SBFD operation or a non-SBFD (i.e., legacy TDD) operation. In a symbol determined for the cell to operate as SBFD, the UE can operate as follows:
1) Transmission of a UL signal/channel can be performed within a frequency resource configured/determined as a UL subband. And/or transmission of the UL signal/channel is not performed outside the frequency resource configured/determined as the UL subband.
2) Reception of a DL signal/channel can be performed within a frequency resource configured/determined as a DL subband. And/or reception of the DL signal/channel is not performed outside the frequency resource configured/determined as the DL subband.
3) Transmission of the UL signal/channel is not performed within a frequency resource configured/determined as a guard subband. And/or transmission of the DL signal/channel is not performed within the frequency resource configured/determined as the guard subband.

Whether the cell performs SBFD/non-SBFD operation for a specific time resource can be dynamically indicated to the UE from a network by DCI. For this, the UE can be dynamically indicated with SBFD/non-SBFD operation information of the cell for specific time resource(s) from the network through DCI signaling.

In the present disclosure, for convenience of description, the DCI through which the SBFD/non-SBFD information is transmitted as described above may be referred to as SBFD-DCI.

### A. Reception of SBFD-DCI

Hereinafter, a configuration method of SBFD-DCI and an operation of a UE for receiving the SBFD-DCI will be described.

Approach 1. SBFD-DCI may mean scheduling DCI (i.e., DL grant, UL grant) transmitted for scheduling PDSCH/PUSCH, etc. In this case, information on whether the cell performs the SBFD/non-SBFD operation for specific time resource(s) can be comprised and transmitted within the scheduling DCI.

In this case, the UE can be indicated with the SBFD/non-SBFD operation information of the cell applied to transmission time resources of PDSCH/PUSCH scheduled through the corresponding DCI (e.g., time resources indicated by a TDRA field in the DCI).

The UE can be indicated with the SBFD/non-SBFD operation information of the cell in such time resources through a specific explicit field in the scheduling DCI, or can be implicitly indicated through a previously existing field.

For example, a 1-bit field is added to the scheduling DCI, and the corresponding field can be used for indicating the SBFD operation or the non-SBFD operation of the cell. For example, in a case where the UE is indicated through the corresponding field in specific scheduling DCI that the cell performs the non-SBFD operation, the UE determines that time resource(s) in which the PDSCH/PUSCH scheduled by the corresponding scheduling DCI is transmitted operate as non-SBFD.

Additionally/independently, the UE can be indicated with the SBFD/non-SBFD operation information of the cell for transmission time resource(s) of a PUCCH scheduled through the corresponding DCI (i.e., a PUCCH transmitted by comprising ACK/NACK information for PDSCH reception after receiving a PDSCH scheduled through the corresponding DCI).

The UE can be indicated with the SBFD/non-SBFD operation information of the cell in such time resources through a specific explicit field in the scheduling DCI, or can be implicitly indicated through a previously existing field.

For example, a 1-bit field is added to the scheduling DCI, and the corresponding field can be used for indicating the SBFD operation or the non-SBFD operation of the cell. In this case, for example, in a case where the UE is indicated through the corresponding field in the specific scheduling DCI that the cell performs the non-SBFD operation, the UE determines that time resource(s) in which the PUCCH scheduled by the corresponding scheduling DCI is transmitted operate as non-SBFD.

The same indication information through the scheduling DCI can jointly indicate information on the PDSCH transmission resource and information on the PUCCH transmission resource. In a case where the UE is indicated with the SBFD/non-SBFD operation information of the cell through a specific explicit field in the scheduling DCI or is implicitly indicated through a previously existing field, the UE can determine that the corresponding operation information is identically applied to the transmission time resource of the PDSCH and the transmission time resource of the PUCCH scheduled by the corresponding DCI.

When using this approach, instead of having to receive information on whether the cell performs dynamic SBFD/non-SBFD operation for every time resource, the UE only needs to receive the information on whether the cell performs the SBFD/non-SBFD operation for time resources in which actual signals/channels such as PDSCH, PUSCH, and PUCCH are transmitted/received. Therefore, there is an advantage that DCI reception overhead is reduced. Also, since information on whether the cell performs dynamic SBFD/non-SBFD operation is received through the existing scheduling DCI, there is an advantage that overhead for designing a separate DCI format and receiving additional DCI is reduced.

Approach 2. SBFD-DCI may be UE-specific and/or UE-group-specific DCI independent of the scheduling DCI.

Approach 2-1. SBFD-DCI is UE-group-specific DCI, and DCI format 2_0 previously used for slot format indication can be used. In this case, information on whether the cell performs the SBFD/non-SBFD operation for specific time resource(s) can be comprised and transmitted within the DCI format 2_0.

For this, field(s) for indicating whether the cell performs the SBFD/non-SBFD operation for the specific time resource(s) can be added to the existing DCI format 2_0. In a case where a relevant configuration for indicating the SBFD/non-SBFD operation information of the cell by the DCI is configured by a higher layer parameter, the UE can determine that such field(s) exist in the DCI format 2_0.

Approach 2-2. SBFD-DCI may be a new dedicated DCI format for indicating information on whether the cell performs the SBFD/non-SBFD operation for the specific time resource(s). Such a DCI format can be transmitted by being CRC-scrambled with a dedicated RNTI (e.g., SBFD-RNTI) different from a C-RNTI. The UE can be configured with a value of the dedicated RNTI used for receiving the SBFD-DCI from the network by higher layer signaling.

When using this approach, a plurality of UEs can receive information on whether the cell performs dynamic SBFD/non-SBFD operation by receiving the same SBFD-DCI. Since the SBFD/non-SBFD operation information of a specific cell for a specific time resource is cell-specific information, the UEs receive the same information for the same time resource. Therefore, when using this approach, there is an advantage that signaling overhead is reduced by having the UE receive the SBFD/non-SBFD operation information of the cell through different or identical fields within the same DCI, rather than transmitting the SBFD/non-SBFD operation information independently for each UE.

### B. Method for indicating dynamic SBFD/non-SBFD information through SBFD-DCI

This section describes a method for dynamically indicating SBFD/non-SBFD operation information of a cell for a specific time resource to a UE through SBFD-DCI.

Approach B-1. Method for indicating SBFD/non-SBFD operation information for each unit time resource.

The UE can be indicated with SBFD/non-SBFD operation information for each time resource from a network. In a case where N time resources exist, SBFD/non-SBFD operation information is indicated for each time resource, and thus a total of N SBFD/non-SBFD operation information can be indicated. For example, the SBFD/non-SBFD operation information is indicated as 1-bit information, and can be indicated as 0 in a case of operating as SBFD and as 1 in a case of operating as non-SBFD. In this case, for example, SBFD/non-SBFD operation information for the N time resources may be a bitmap consisting of N bits. Through the bitmap information, the UE can determine whether the cell operates as SBFD or non-SBFD in a corresponding time resource depending on whether a bit value corresponding to each time resource is 0 or 1.

### [Configuration B-1-1] In this case, each time resource can be configured as follows.

Alt 1. One time resource consists of one slot. In a case where information on N time resources is indicated, the N time resources may mean N consecutive or non-consecutive slots.

For example, the N time resources may mean N slots configured as SBFDs. That is, N time resources from a specific slot may mean N SBFD slots excluding non-SBFD slot(s) sequentially from the specific slot.

Alt 2. One time resource consists of a plurality (K) of consecutive slots or consecutive symbols. In a case where information on N time resources is indicated, the N time resources can consist of N consecutive or non-consecutive time resources. At this time, each time resource can consist of K consecutive slots or symbols, respectively.

In this case, a value of K can be defined as a fixed value in a standard specification. Alternatively, the UE can be configured with the value of K from the network by higher layer signaling.

Alt 3. Slot/symbol resources constituting one time resource can be configured from the network. That is, information on slot/symbol resources constituting each time resource can be configured from a base station to the UE.

For example, in a case where one time resource consists of consecutive slots/symbols, the UE can be configured with information on a start slot (or symbol) and a slot duration (or symbol duration) for each time resource from the network. From this, the UE can determine that time resources as much as the slot duration (or symbol duration) from the configured slot (or symbol) position constitute the corresponding time resource. At this time, the slot duration (or symbol duration) can comprise only slots/symbols configured as SBFD. That is, L slot/symbol durations from a specific slot/symbol may mean L SBFD slots/symbols excluding non-SBFD slot(s) sequentially from the specific slot/symbol.

In a case where information on N time resources is indicated, the UE can be configured with information on slot/symbol resources constituting each corresponding time resource for the N time resources from the network.

The UE can be indicated with SBFD/non-SBFD operation information for the N time resources through a specific field in the SBFD-DCI. Such a field can consist of N-bits.

More specifically, the UE can be indicated with SBFD/non-SBFD operation information for N_{d} time resources through a d-th field among D fields constituting the SBFD-DCI. Such a field can consist of N_{d} bits.

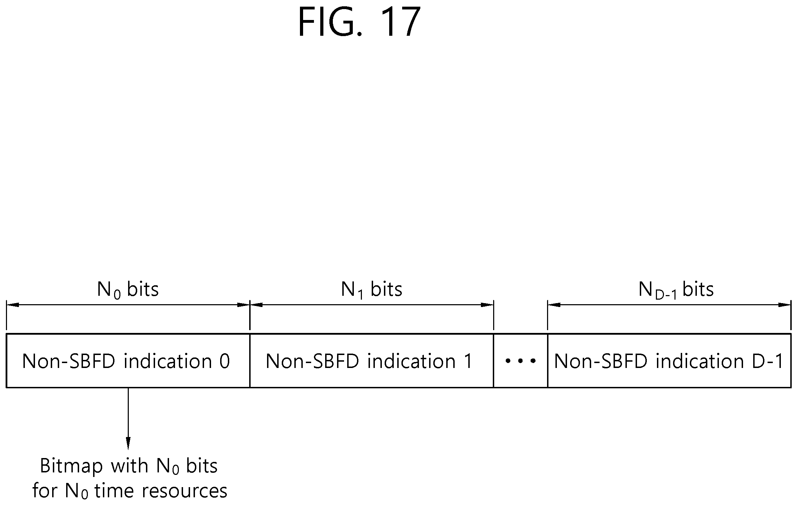

FIG. 17 illustrates a configuration example of SBFD-DCI.

Referring to FIG. 17, for example, D fields may exist in one SBFD-DCI.

A length of a d-th field in the SBFD-DCI is equal to N_{d}. At this time, for d = 0, 1, ..., D-1, all values of N_{d} may be equal to N.

Alternatively, the value of N_{d} may be independent according to a value of d.

A starting bit location of the d-th field in the SBFD-DCI is equal to S_{d}. That is, the UE determines that a bit position where the d-th field starts in the SBFD-DCI is equal to S_{d}.

At this time, in a case where the values of N_{d} are all equal to N for d = 0, 1, ..., D-1, the value of S_{d} may be equal to N*d. Alternatively, the value of N_{d} may be independent according to the value of d.

[Configuration B-1-2] The UE receives only one DCI field within the SBFD-DCI and can be indicated with SBFD/non-SBFD operation information for each time resource through this. In order to determine a position of a field received by the UE among a plurality of fields in the DCI, in a case where the UE receives the d-th field in the SBFD-DCI, the UE needs to know position and length information of the d-th field in the DCI. For this, the UE can be configured with information on a field received by itself in the SBFD-DCI from the network.

The UE can be configured with or determine a value of N_{d}, which is the length of the d-th field in the SBFD-DCI, from the network. In this case, the UE determines that the length of the d-th field is equal to N_{d}.

The UE can be configured with the value of N_{d}, which is a length value of the field received by itself in the SBFD-DCI, from the network through higher layer signaling.

Alternatively, if the UE is configured with the number of time resources for which the SBFD/non-SBFD operation information is indicated through the SBFD-DCI from the network, the UE determines that the corresponding value is equal to N_{d}, which is the length of the field in the DCI received by the UE.

The UE can be configured with or determine an S_{d} value, which is the starting bit location of the d-th field in the SBFD-DCI, from the network. In this case, the UE determines that the bit position where the d-th field starts is equal to S_{d}.

The UE can be configured with the value of S_{d}, which is a starting bit location value of the field received by itself in the SBFD-DCI, from the network through higher layer signaling.

Through the information as described above, the UE may determine that N_{d} bits from an S_{d}-th bit in the DCI constitute the d-th field received by the UE in the SBFD-DCI.

The UE receives a plurality of DCI fields within the SBFD-DCI, and through this, can be indicated with SBFD/non-SBFD operation information for each time resource. In a case where the UE receives A fields in the SBFD-DCI, the UE needs to know position and length information of each field in the DCI. For this, the UE can be configured with information on fields received by itself in the SBFD-DCI from the network. For example, the UE can be configured with a length value and a starting bit location value of each field for the A fields. For example, in a case where the UE receives two DCI fields, in order to determine a position of a d1-th field in the SBFD-DCI, an N_{d1} value, which is a length of the d1-th field, and an S_{d1} value, which is a starting bit location of the d1-th field, are configured. And in order to determine a position of a d2-th field, an N_{d2}, which is a length of the d2-th field, and an S_{d2} value, which is a starting bit location of the d2-th field, can be configured.

In a case where the UE receives a plurality of DCI fields in one SBFD-DCI, each DCI field can indicate SBFD/non-SBFD operation information for time resources independent of/different from each other. That is, in a case where the UE receives the d1-th and d2-th DCI fields, SBFD/non-SBFD operation information for each time resource for N_{d1} time resources is indicated from the d1-th field, and SBFD/non-SBFD operation information for each time resource for other N_{d2} time resources can be indicated from the d2-th field.

The UE determines field(s) received by itself in the SBFD-DCI using the method as described above, and can be indicated with SBFD/non-SBFD operation information for each time resource through the corresponding field(s).

An example of an operation of the UE proposed in Approach B-1 is as follows.

The UE receives SBFD-DCI from the network, and through a specific field in the SBFD-DCI, receives and determines information indicating which one of SBFD or non-SBFD a cell operates as for each of N_{d} time resources associated with the corresponding field (i.e., information on an operation scheme).

The field in the SBFD-DCI received by the UE can consist of N_{d} bits. In the N_{d} bits, each bit can sequentially indicate one operation scheme among SBFD/non-SBFD for each of the N_{d} time resources. For example, if an n-th bit is 0, the cell operates as SBFD in an n-th time resource, and if the n-th bit is 1, it may mean that the cell operates as non-SBFD in the n-th time resource (and vice versa).

The N_{d} time resources may be N time resources from a specific slot, which can be configured as in [Configuration B-1-1]. For example, the N_{d} time resources may mean N SBFD slots excluding non-SBFD slot(s) sequentially from a specific slot.

The UE may determine N_{d} bits from the S_{d}-th bit in the SBFD-DCI as bits constituting the field received by the UE. For this, the UE can receive a value of S_{d} and/or N_{d} from the network through higher layer signaling.

When using the Approach B-1 method, there is an advantage that information on all time resources can be indicated using a small number of bits when a large number of time resources exist. For example, in a case where 16 time resources exist, 4*8 bits are required to inform 8 identity (ID) values of time resources operating as non-SBFD. On the other hand, in a case of indicating SBFD/non-SBFD operation information for each time resource in a bitmap manner, 16 bits may be used, which is advantageous in terms of overhead when a large number of time resources should be indicated.

Approach B-2. Method for indicating time resource information operating as non-SBFD (or SBFD).

The UE can be indicated with information on time resource(s) in which the cell operates as non-SBFD (or operates as SBFD) from the network. For this, the UE can receive information on time resource(s) in which the cell operates as non-SBFD by receiving SBFD-DCI. The UE may determine that the cell operates as non-SBFD in the indicated time resource(s).

[Configuration B-2-1]. At this time, the UE can be indicated with time resource(s) in which the cell operates as non-SBFD through a specific field in the SBFD-DCI as follows.

Alt 1. Through a specific field, the UE can be indicated with an ID (i.e., time resource ID) value indicating a specific time resource. In this case, information on a time resource corresponding to each ID exists.

The UE can be configured with information on an ID corresponding to a time resource and/or information on a configuration of a time resource corresponding to an ID from the network through higher layer signaling.

In this case, one time resource can be configured as follows.

Alt 1-1. One time resource consists of one slot. In this case, information on a slot offset corresponding to a position of the corresponding time resource from a reference position can be configured to define the time resource.

Alt 1-2. One time resource consists of a plurality (K) of consecutive slots or consecutive symbols. At this time, a value of K can be defined as a fixed value in a standard specification. Alternatively, the UE can be configured with the value of K from the network by higher layer signaling. In this case, information on a slot offset corresponding to a position of the corresponding time resource from a reference position can be configured to define a specific time resource. Since one time resource is configured in units of K consecutive slots or consecutive symbols, the slot offset can be limited to a multiple of K.

Alt 1-3. Information on slot/symbol resources constituting one time resource can be configured from a base station to the UE.

For example, in a case where one time resource consists of consecutive slots/symbols, the UE can be configured with information on a start slot (or start symbol) and a slot duration (or symbol duration) for each time resource from the network. From this, the UE may determine that a time interval as much as the slot duration (or symbol duration) from the configured slot (or symbol) position constitutes the corresponding time resource. At this time, the slot duration (or symbol duration) can comprise only slots/symbols configured as SBFD. That is, L slot/symbol durations from a specific slot/symbol may mean L SBFD slots/symbols excluding non-SBFD slot(s) sequentially from the specific slot/symbol.

Alt 2. Through a specific field, the UE can be indicated with an ID (i.e., time resource combination ID) value indicating a set/combination of one or a plurality of time resources. In this case, information on a set/combination of time resources corresponding to each ID may exist.

One time resource combination ID may be linked to a plurality of time resource IDs. That is, IDs of time resources belonging to a corresponding combination can be configured for each time resource combination ID. At this time, each time resource can be configured as, for example, Alt 1-1, 1-2, or 1-3 of the Alt 1.

Alt 3. Through a specific field, the UE can be indicated with information on slot/symbol resources constituting a specific time resource.

In this case, the UE can be indicated with values corresponding to a start slot and a slot duration through a specific field in the SBFD-DCI.

For example, a value corresponding to the start slot (a value corresponding to a slot offset from a reference slot) can be indicated through a specific field in the SBFD-DCI, and a value corresponding to the slot duration can be indicated through another field. The UE may determine that the cell operates as non-SBFD in the time resource(s) indicated through the SBFD-DCI as described above.

[Configuration B-2-2]. The UE receives one DCI field within the SBFD-DCI and through this can be indicated with a time resource set/combination in which the cell operates as non-SBFD. In order to determine a position of a field received by the UE among a plurality of fields in the DCI, in a case where the UE receives the d-th field in the SBFD-DCI, the UE needs to know position and length information of the d-th field in the DCI. For this, the UE can be configured with information on a field received by itself in the SBFD-DCI from the network.

The UE can be configured with or determine a value of N_{d}, which is the length of the d-th field in the SBFD-DCI, from the network. In this case, the UE determines that the length of the d-th field is equal to N_{d}.

The UE can be configured with the value of N_{d}, which is a length value of the field received by itself in the SBFD-DCI, from the network through higher layer signaling.

Alternatively, when the number of time resources or time resource sets/combinations that can be indicated through a specific field in the SBFD-DCI from the network (i.e., the number of time resources or time resource sets/combinations in which the cell configured by the UE operates as non-SBFD as in the Configuration B-2-1) is referred to as 'N_resource', the UE determines that the value of N_{d} is equal to log₂(N_resource) or log₂ceil(N_resource). The Ceil(x) function returns the smallest integer value that is bigger than or equal to x.

The UE can be configured with or determine an S_{d} value, which is the starting bit location of the d-th field in the SBFD-DCI, from the network. In this case, the UE determines that the bit position where the d-th field starts is equal to S_{d}.

Alternatively, the UE is indicated with a d value indicating an order of the field received by the UE from the network through higher layer signaling from the network. In this case, the UE determines that the S_{d} value is equal to d*N_{d}. Alternatively, the UE determines that the S_{d} value is equal to d·log₂(N_resource) or d·log₂ceil(N_resource).

The UE can be indicated with a plurality of time resources in which the cell operates as non-SBFD through a plurality of fields in the SBFD-DCI. For example, in order to be indicated with N time resources or N time resource sets/combinations in which the cell operates as non-SBFD, N fields can be received, and one time resource set/combination can be indicated through each field. At this time, the UE can be indicated with the time resource set/combination in which the cell operates as non-SBFD through each field as in the [Configuration B-2-1].

For this, the UE can be configured with information on fields received by itself in the SBFD-DCI from the network. The UE can be configured with a length value and a starting bit location value of each field for the A fields. For example, in a case where the UE receives two DCI fields, in order to determine a position of a d1-th field in the SBFD-DCI, an N_{d1} value, which is a length of the d1-th field, and an S_{d1} value, which is a starting bit location of the d1-th field, are configured. And in order to determine a position of a d2-th field, an N_{d2}, which is a length of the d2-th field, and an S_{d2} value, which is a starting bit location of the d2-th field, can be configured.

The UE determines field(s) received by itself in the SBFD-DCI using the method as described above, and can be indicated with information on time resource(s) in which the cell operates as non-SBFD through the corresponding field(s).

An example of an operation of the UE proposed in Approach B-2 is as follows.

The UE receives SBFD-DCI from the network, receives information on time resource(s) indicated in a corresponding field through a specific field in the SBFD-DCI, and determines that the cell operates as non-SBFD for the corresponding time resource(s).

The field in the SBFD-DCI received by the UE consists of N_{d} bits, and the corresponding bits indicate an ID of a time resource combination.

The UE is configured with a plurality (N_resource) of time resource combinations from the network. A time resource combination corresponding to a specific ID consists of a plurality of time resources, and the UE is configured with IDs of time resources constituting each time resource combination from the network. The UE is configured with slot/symbol information constituting a time resource corresponding to each ID from the network.

The UE determines N_{d} bits from the S_{d}-th bit in the SBFD-DCI as bits constituting the field received by the UE. For this, the UE receives (is configured with) the value of S_{d} from the network through higher layer signaling. The UE determines that the value of N_{d} is equal to log₂(N_resource) or log₂ceil(N_resource).

The indication through the SBFD-DCI can be applied only to symbol/slot resources for which the UE is semi-statically indicated by the network that the cell will operate as SBFD.

Although the contents of the above disclosure describe/propose the TDD fallback operation from a DL scheduling perspective, the contents and concepts of the present disclosure can also be applied to a TDD fallback operation from a UL scheduling perspective.

Hereinafter, in a case of applying dynamic SBFD, a dynamic indication method of an SBFD symbol for minimizing a transition point between the SBFD symbol and a non-SBFD symbol is described.

A base station may perform a full duplex operation and a UE may perform a half duplex operation, or the base station may perform the half duplex operation and the UE may perform the full duplex operation. Alternatively, both the base station and the UE may support the full duplex operation.

A UE that knows that the full duplex operation can be performed in the base station may be referred to as an FD-aware UE. A UE that knows that the base station can perform a subband non-overlapping full duplex (i.e., SBFD) operation may be referred to as an SBFD-aware UE. A UE that knows that the base station can perform a spectrum shared (or subband overlapping) full duplex (i.e., SSFD) operation may be referred to as an SSFD-aware UE.

In a case where the base station supports both performing the half duplex and the full duplex operations, information on time or frequency, or both time and frequency, for resources in which the half duplex and the full duplex can be performed (or are expected or requested to be performed) can be informed to the UE.

In a case where the base station can perform the SSFD operation, in a case of a full duplex base station, UL reception can be simultaneously possible in some/or all frequency resources among frequency resources in which DL transmission of the base station is possible. That is, in some frequency resources, not only the DL transmission/reception but also the UL reception/transmission may be possible. At this time, in a case of the SSFD, information on frequency resources where the SSFD is possible can be delivered to the UE. And information on time resources where the SSFD is possible can be delivered to the UE.

In a case of a full duplex UE, the UL transmission can be simultaneously possible in some/or all frequency resources among frequency resources in which DL reception of the UE is possible. In the present disclosure, a UE performing the half duplex operation is referred to as an HD UE, and a UE capable of performing or performing the full duplex operation is referred to as an FD UE.

In a case where the base station performs the full duplex operation such as SBFD and SSFD, the SSFD and/or SBFD operation can be performed only for some time/frequency resources. In a case of the SBFD-aware UE and/or the SSFD-aware UE, if the UE knows time/frequency resources in which a cell performs the SSFD and/or SBFD operations, the UE can perform an operation differently according to a resource in which the cell operates as a half duplex (HD), a resource in which the cell operates as SBFD, and a resource in which the cell operates as SSFD. For example, the UE can perform transmission and reception by differently determining time/frequency resources in which the UE performs reception of a DL signal/channel and/or transmission of a UL signal/channel according to an HD resource, an SBFD resource, and an SSFD resource.

The present disclosure describes a method of determining time/frequency resources in which the cell performs the full duplex after the UE is configured with information for determining the time/frequency resources in which the full duplex is performed from the base station.

Through the contents of the present disclosure, the base station and the UE can operate as follows.

The base station performs the half duplex operation of performing only one of DL transmission or UL reception in all frequency resources constituting a corresponding cell in a time resource operating as HD, and in time resources operating as SBFD and SSFD, the base station performs the full duplex operation of performing DL transmission through a first frequency resource (i.e., DL subband resource) within the frequency resources constituting the corresponding cell and simultaneously performing UL reception through a second frequency resource (i.e., UL subband resource) within the frequency resources constituting the corresponding cell.

For this, the base station determines/decides a time resource corresponding to a first time resource (i.e., HD symbol) and a second time resource (i.e., FD symbol) and transmits configuration information on the first time resource (i.e., HD symbol) and/or the second time resource (i.e., FD symbol) to the UE. The FD symbol may comprise both the SBFD symbol and the SSFD symbol. More specifically, the base station determines/decides time resources corresponding to the HD symbol, the SBFD symbol, and/or the SSFD symbol, and transmits configuration information on the HD symbol, the SBFD symbol, and/or the SSFD symbol to the UE.

At this time, the DL subband resource and/or the UL subband resource in the time resource operating as SBFD and the time resource operating as SSFD can be configured differently. In the time resource operating as SBFD, the DL subband resource and the UL subband resource are configured not to overlap with each other. In the time resource operating as SSFD, the DL subband resource and the UL subband resource can be configured to overlap with each other. The DL subband/UL subband resource can consist of some frequency resources of a system band or all frequency resources.

The UE receives configuration information on the HD symbol, the SBFD symbol, and/or the SSFD symbol from a network to determine positions of the HD symbol, the SBFD symbol, and/or the SSFD symbol. At this time, in the HD symbol, the UE performs DL reception (UL transmission) through all frequency resources configured for the UE to operate the DL reception (UL transmission), and in the SBFD symbol and/or the SSFD symbol, the UE performs the DL reception (UL transmission) through DL subband (UL subband) resources which are same as or limited compared to the frequency resources in which the UE performs the DL reception (UL transmission) in the HD symbol. In this case, even if the UE is configured with the DL reception (UL transmission) to frequency resources not corresponding to the DL subband resource (UL subband resource) in the SBFD symbol and/or the SSFD symbol resource, the UE does not perform the DL reception (UL transmission) in frequency resources not corresponding to the DL subband resource (UL subband resource).

Hereinafter, Duplex Evolution is described.

### 1. SBFD operations.

For SBFD operation in a TDD carrier, an SBFD subband can consist of one resource block (RB) or a set of continuous RBs for a same transmission direction. The SBFD symbol can be defined as a symbol in which there is a subband to be used for the SBFD operation by the base station.

In the SBFD symbol (except for a legacy UL symbol) within the TDD carrier, the maximum number of UL subbands for the SBFD operation can be 1. Such a UL subband can be located at one side of the carrier or located at a middle portion of the carrier.

Whether the SBFD operation is supported in an SSB symbol may be a problem. A UL subband can be configured in the SSB symbol. If the SBFD-aware UE is not allowed to transmit in the SSB symbol but can be allowed to receive within a DL BWP of the SSB symbol, a negative effect on SSB detection and measurement can be avoided, but UL performance can be degraded because UL transmission occasions decrease. If the SBFD-aware UE is allowed to transmit in the SSB symbol, the UE can perform the UL transmission only in a UL subband according to scheduling, configuration, measurement or priority rules of the base station. If the SBFD-aware UE is requested to transmit in the SSB symbol, there may be a negative effect on the SSB detection and measurement.

Whether a slot can consist of both an SBFD symbol and a non-SBFD symbol may also be a problem. One motivation for allowing one slot to consist of the SBFD symbol and the non-SBFD symbol is compatibility with a symbol-level TDD UL/DL configuration.

However, if a transition between the SBFD symbol and the non-SBFD symbol frequently occurs, implementation complexity increases and a suspension of transmission and reception can occur during the transition. At least in a case of semi-static SBFD, a potential limitation on the number of maximum transition points between the SBFD and the non-SBFD symbols may be considered from a viewpoint of SBFD subband configuration to avoid frequent transitions between the SBFD symbol and the non-SBFD symbol.

Within a TDD UL/DL pattern period, a maximum of two transition points can be considered, such as one transition point from the non-SBFD symbol to the SBFD symbol and one transition point from the SBFD symbol to the non-SBFD symbol. A guard period between the SBFD symbol and the non-SBFD symbol may or may not be needed at a base station and/or UE side according to base station/UE implementation and/or SBFD operation.

Time and frequency positions of a subband within the TDD carrier are not fixed in a standard specification. The base station can consider following options on whether to inform the UE of the time and/or frequency positions of the subband to be used for the SBFD operation, and at least in an RRC_CONNECTED state, the following option 4 may be considered preferentially.

### 1) SBFD operation option 1.

Time and frequency positions of a subband for the SBFD operation are not informed to the UE. From a viewpoint of the base station, a UE operation can follow existing specifications without introducing a new UE operation for the SBFD operation.

### 2) SBFD operation option 2.

Time and frequency positions of a subband for the SBFD operation are not informed to the UE. A UE operation of a non-SBFD-aware UE follows existing specifications. A new UE operation can be introduced for the SBFD-aware UE from a RAN1 viewpoint.

### 3) SBFD operation option 3.

Only the time position of the subband for the SBFD operation is informed to the SBFD-aware UE. A UE operation of the non-SBFD-aware UE follows existing specifications. A new UE operation for the SBFD-aware UE can be introduced based on the time position of the subband for the SBFD operation from the RAN1 viewpoint.

### 4) SBFD operation option 4.

Both the time and frequency positions of the subband for the SBFD operation are informed to the SBFD-aware UE. A UE operation of the non-SBFD-aware UE follows existing specifications. A new UE operation for the SBFD-aware UE can be introduced based on the time and frequency positions of the subband for the SBFD operation from the RAN1 viewpoint.

Among the four options, SBFD operation option 4 is used as the SBFD operation at least in the RRC_CONNECTED state.

Random access in the SBFD symbol may be a problem. If random access in the SBFD symbol for the SBFD-aware UE is allowed, random access latency can be potentially reduced, a PRACH collision probability can be reduced, and coverage of PRACH and Message 3 (Msg3) can be improved. Transmission of the PRACH and Message 3 in the UL subband of the SBFD symbol can induce CLI (cross link interference) among UEs. For transmission of the PRACH and Message 3 in a symbol configured as the DL in TDD-UL-DL-ConfigCommon, the random access in the SBFD symbol may be allowed.

### <Semi-static configuration of SBFD subband>

For indicating a subband position for SBFD operation, subband time and frequency positions can be semi-statically configured. In a case of the semi-static configuration of the time position of the subband for the SBFD operation, the time position of the SBFD subband within a period can be explicitly configured.

In a case of the semi-static configuration of the frequency position of the subband for the SBFD operation, at least an explicit indication of the frequency position of a UL subband may be required. In a case of semi-static SBFD, frequency positions of a DL subband and a guard band (if any) can be configured by one of following two options.

Option 1: The frequency position of the DL subband can be explicitly configured. The guard band (if any) can be implicitly derived as resource blocks not belonging to the UL subband or the DL subband.

Option 2: The number of resource blocks for the guard band (if any) can be explicitly configured. The DL subband can be implicitly derived as resource blocks not belonging to the UL subband or the guard band.

In the case of semi-static SBFD, an SBFD-aware UE does not transmit a UL channel/signal or receive a DL channel/signal in the guard band recognized by the UE.

In the case of the semi-static configuration of the subband frequency position for the SBFD operation, frequency positions of UL/DL subbands can refer to a common resource block (CRB) grid. In the case of the semi-static configuration of the subband position, a same subband frequency resource can be configured in different SBFD symbols.

### <SBFD operation in symbols configured as DL in TDD-UL-DL-ConfigCommon>

In an SBFD symbol configured as the DL in TDD-UL-DL-ConfigCommon, in a case of the SBFD-aware UE for which the UL subband is semi-statically configured, UL transmission within the UL subband is allowed in the SBFD symbol. UL transmission outside the UL subband is not allowed in the SBFD symbol. The frequency position of the DL subband is known to the SBFD-aware UE. The frequency position of the DL subband can be explicitly indicated or implicitly derived. DL reception within the DL subband is allowed in the SBFD symbol. The UL transmission is within an active UL BWP, and the DL reception is within an active DL BWP.

For the SBFD-aware UE, it may be a problem whether DL reception outside the semi-statically configured DL subband is allowed in a symbol configured as the DL by TDD-UL-DL-ConfigCommon. One of following options can be considered.

Option 1 (Semi-static SBFD): DL reception outside the semi-statically configured DL subband is not allowed.

Option 2 (Dynamic SBFD): DL reception outside the semi-statically configured DL subband is allowed.

### <SBFD operation in symbols configured as Flexible by TDD-UL-DL-ConfigCommon>

During the SBFD operation in a symbol configured as Flexible by TDD-UL-DL-ConfigCommon, following methods can be considered.

Alt 1: UL transmission within the UL subband is allowed in the symbol. UL transmission outside the UL subband is not allowed in the symbol. The frequency position of the DL subband is known to the SBFD-aware UE. DL reception within the DL subband is allowed in the symbol.

Alt 2: UL transmission within the UL subband is allowed in the symbol. Resource blocks outside the UL subband can be used as the DL excluding the UL or the guard band in the symbol from a viewpoint of the base station, and transmission directions of all resource blocks are the same. The frequency position of the DL subband is known to the SBFD-aware UE. DL reception within the DL subband is allowed in the symbol.

In both options, the UL transmission in the symbol is within the active UL BWP and the DL reception is within the active DL BWP. For all resource blocks outside the UL subband, the UE cannot simultaneously use separate resource blocks for the DL and the UL.

Whether DL reception outside the semi-statically configured DL subband and UL transmission outside the semi-statically configured UL subband are allowed in the symbol configured as Flexible by TDD-UL-DL-ConfigCommon can be based on one of following options.

Option 1 (Semi-static): DL reception outside the semi-statically configured DL subband is not allowed, and UL transmission outside the semi-statically configured UL subband is not allowed.

Option 2 (Dynamic SBFD): DL reception outside the semi-statically configured DL subband is allowed. UL transmission outside the semi-statically configured UL subband is not allowed.

Option 3 (Dynamic SBFD): DL reception outside the semi-statically configured DL subband is allowed. UL transmission outside the semi-statically configured UL subband is allowed.

### <Dynamic SBFD>

In a case of dynamic SBFD, following matters can be considered.

Compared to semi-static SBFD, the dynamic SBFD can better adapt to UL/DL resource requirements according to UL/DL traffic load. The dynamic SBFD may increase implementation complexity of a base station due to dynamic antenna/panel switching and filter/RF tuning, resource loss may occur due to transition time, CLI between base stations may increase, scheduling complexity may increase, and an impact of additional specifications on the semi-static SBFD may occur.

In a case where the UE supports the dynamic SBFD, implementation complexity of the UE may increase, and inter-UE CLI may increase due to the dynamic SBFD.

In a case where the dynamic SBFD is supported, following options can be considered.

Option 1: The dynamic SBFD can be achieved by DCI used for scheduling DL reception outside a semi-statically configured SBFD DL subband or scheduling UL transmission outside a semi-statically configured SBFD UL subband.

Option 2: The dynamic SBFD can be achieved through non-scheduling DCI, and the non-scheduling DCI indicates whether a symbol is an SBFD symbol.

Option 3: The dynamic SBFD is achieved by a MAC-CE indicating whether a symbol is an SBFD symbol.

By introducing a flexible subband type to Option 1, the DL reception outside the semi-statically configured SBFD DL subband can be achieved or the UL transmission outside the semi-statically configured SBFD UL subband can be achieved.

In any of the options, there may be no dynamic change in a DL/UL subband size.

The UE can be semi-statically configured with information on a position of an SBFD symbol resource, which is a symbol in which a cell operates as SBFD, from the base station. The UE can be configured with the position of the SBFD symbol directly from a network. And/or the UE may determine a symbol for which a UL subband is semi-statically configured from the network as the SBFD symbol. A method in which the position of the SBFD symbol is semi-statically configured/determined when the cell performs SBFD operation is referred to as semi-static SBFD.

Meanwhile, additionally/independently, the UE can be dynamically configured with information on the position of the SBFD symbol resource, which is a symbol in which the cell operates as SBFD, from the base station. The UE may determine a symbol for which the UL subband is dynamically configured from the network as the SBFD symbol. A method in which the position of the SBFD symbol is dynamically configured/determined when the cell performs SBFD operation is referred to as dynamic SBFD. Additionally, in the case of the dynamic SBFD, only a symbol semi-statically configured/determined as the SBFD symbol can be dynamically switched to a non-SBFD symbol. Alternatively, in the case of the dynamic SBFD, it may be possible that a symbol semi-statically configured/determined as the SBFD symbol is dynamically switched to a non-SBFD symbol and a symbol semi-statically configured/determined as a non-SBFD symbol is dynamically switched to the SBFD symbol.

In a case of configuration/determination of the semi-static SBFD symbol, in order to minimize transition points between the SBFD symbol and the non-SBFD symbol, consecutive symbol resources within a specific period/specific interval can be configured/determined as SBFD symbols and remaining resources can be configured/determined as non-SBFD symbols. Such a period/interval may be same as a period of configuration information configured by TDD-UL-DL-ConfigCommon.

Meanwhile, in a case of applying the dynamic SBFD, a specific SBFD symbol can be switched to a non-SBFD symbol. Accordingly, compared to a method operating based only on semi-static SBFD symbol configuration, a phenomenon in which the transition point between the SBFD symbol and the non-SBFD symbol increases may occur. For example, in a case where five slots are configured as DXXXU, two transition points exist within a period consisting of five slots. The n letters (e.g., DXXXU) mean resource configuration information applied to n consecutive slots in order, wherein D means a DL slot (non-SBFD slot), X means an SBFD slot, and U means a UL slot (non-SBFD slot). On the other hand, if the dynamic SBFD is applied, for example, a third slot among the five slots may be switched to non-SBFD symbols and the five slots may be configured as DXDXU. In this case, the SBFD symbol resource exists non-consecutively within a same period, and existing two transition points increase to four. That is, due to the application of the dynamic SBFD, a problem may occur in which the number of transition points between the SBFD symbol and the non-SBFD symbol increases compared to the semi-static SBFD operation.

The present disclosure describes a dynamic indication method of the SBFD symbol for minimizing transition points between the SBFD symbol and the non-SBFD symbol when applying the dynamic SBFD.

Hereinafter, for convenience of description, the description is performed assuming that the SBFD resource can be configured/determined with a symbol as a granularity. However, the SBFD resource can also be configured/determined with a slot as a granularity, and considering this, a symbol in the present disclosure can be replaced with a slot and interpreted.

The contents of the present disclosure describe a method of determining the SBFD symbol and the non-SBFD symbol within a time resource in which the UE operates. However, the contents of the present disclosure can be expanded and interpreted/applied as follows.

The contents of the present disclosure can be interpreted/applied as a method in which the UE determines an SSFD symbol and a non-SBFD symbol within the time resource. For this, the SBFD symbol in the contents of the present disclosure can be replaced with the SSFD symbol and interpreted/applied.

The contents of the present disclosure can be expanded and interpreted/applied as a method in which the UE determines a symbol dynamically operating as SSFD among semi-statically configured/determined SBFD symbols. For this, a symbol switched to non-SBFD indicated for dynamic SBFD operation in the contents of the present disclosure can be replaced with a symbol dynamically switched to SSFD operation and interpreted/applied.

The contents of the present disclosure can be expanded and interpreted/applied as a method in which the UE determines a symbol dynamically operating as SBFD among semi-statically configured/determined SSFD symbols. For this, the semi-statically configured/determined SBFD symbol in the contents of the present disclosure can be replaced with a semi-statically configured/determined SSFD symbol and interpreted/applied, and the symbol switched to non-SBFD indicated for the dynamic SBFD operation can be replaced with a symbol dynamically switched to the SBFD operation and interpreted/applied.

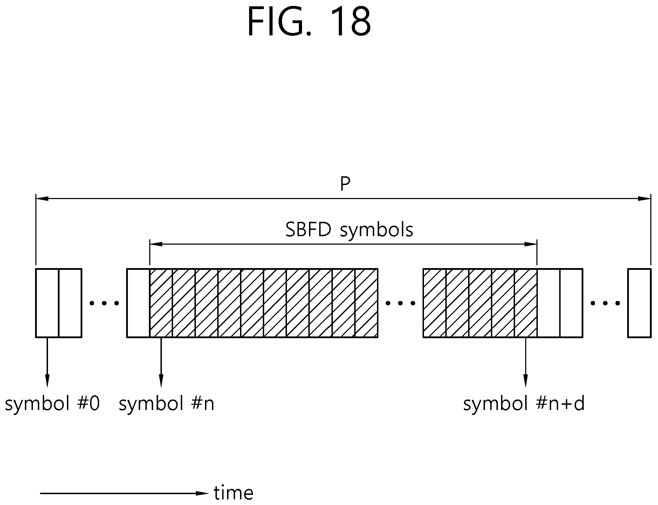

FIG. 18 illustrates SBFD symbols semi-statically configured/determined.

Referring to FIG. 18, consecutive symbols from symbol #n to symbol #n+d within a period (or a specific time interval) P are semi-statically configured/determined SBFD symbols. In this case, symbol #n is a transition point from a non-SBFD symbol to an SBFD symbol, and symbol #n+d+1 is a transition point from an SBFD symbol to a non-SBFD symbol.

The period P may mean a period of configuration of a semi-static SBFD symbol. The semi-static SBFD symbol can be repeatedly applied with the period P. Such a period P may be the same as a period configured by TDD-UL-DL-ConfigCommon. For example, TDD-UL-DL-ConfigCommon can configure one TDD UL-DL pattern or two TDD UL-DL patterns, and indicates a period of a TDD UL-DL pattern through 'dl-UL-TransmissionPeriodicity'. At this time, when only one TDD UL-DL pattern is configured, the period P (i.e., the period of the configuration of the semi-static SBFD symbol) may be same as a TDD UL-DL pattern period configured by 'dl-UL-TransmissionPeriodicity'. When two TDD-UL-DL patterns are configured, the period P may be the same as the sum of the two TDD-UL-DL pattern periods configured by dl-UL-TransmissionPeriodicity in TDD-UL-DL-ConfigCommon.

In a case where a cell supports dynamic SBFD, a symbol semi-statically configured as the SBFD symbol can be switched to a non-SBFD symbol. In the example of FIG. 18, all or some symbols among the consecutive symbols from symbol #n to symbol #n+d can be switched to the non-SBFD symbol.

In a case where the SBFD symbol is semi-statically configured/determined as in FIG. 18, a maximum of two transition points exist between the SBFD symbol and the non-SBFD symbol within the period P. In order to support the dynamic SBFD without increasing the number of such transition points, the present disclosure proposes the following.

### Proposed Method 1.

Assume that consecutive symbols from symbol #n to symbol #n+d within the period P are configured as SBFD symbols, and remaining symbols are configured as non-SBFD symbols. In this case, 'a' consecutive SBFD symbols from symbol #n (i.e., 'a' SBFD symbols located temporally after symbol #n) can be (dynamically) switched to the non-SBFD symbol. And/or 'b' consecutive SBFD symbols from symbol #n+d in a reverse time order (i.e., located temporally before symbol #n+d) can be (dynamically) switched to the non-SBFD symbol.

Additionally/independently, in a case where switching a symbol semi-statically configured/determined as the non-SBFD symbol to the SBFD symbol is allowed, a' consecutive non-SBFD symbols from symbol #n-1 in the reverse time order can be (dynamically) switched to the SBFD symbol. And/or b' consecutive non-SBFD symbols from symbol #n+d+1 can be (dynamically) switched to the SBFD symbol.

At this time, the period P may be the same as a period of position (location) information of the SBFD symbol semi-statically configured/determined by the UE (or a period configured by TDD-UL-DL-ConfigCommon).

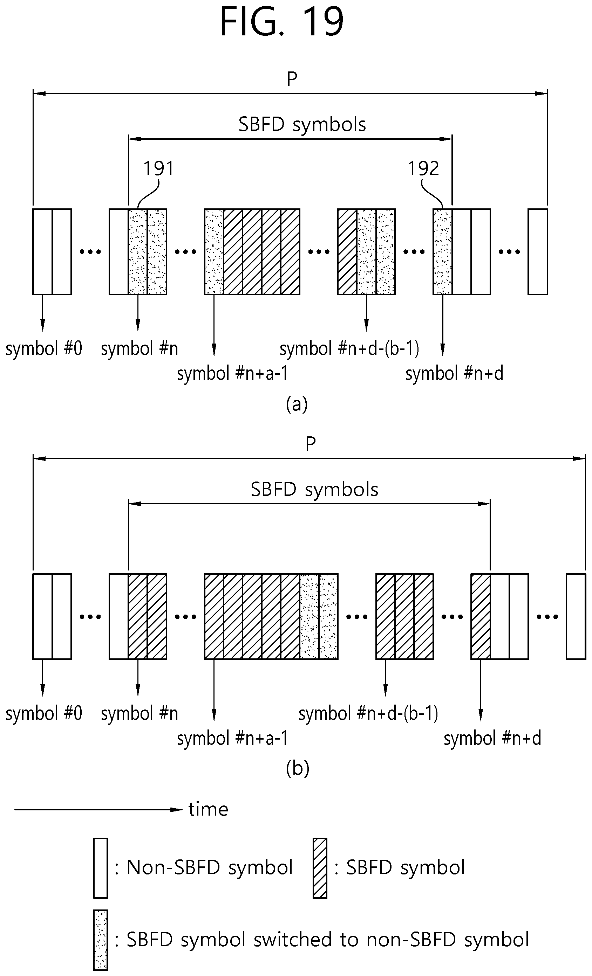

FIG. 19 illustrates examples in which some of SBFD symbols existing within a period P are switched (transformed) to non-SBFD symbols.

Referring to (a) of FIG. 19, a plurality of SBFD symbols can be configured (can exist) within a period P interval. In this case, 'a' SBFD symbols from a first SBFD symbol (191) among the plurality of SBFD symbols and 'b' SBFD symbols from a last SBFD symbol (192) in a reverse time order can be switched/transformed to non-SBFD symbols.

For example, when the plurality of SBFD symbols are symbols #n, #n+1, ..., #n+d, i) symbols from symbol #n to symbol #n+a-1 and ii) symbols from symbol #n+d-(b-1) to symbol #n+d can be switched/transformed to non-SBFD symbols.

According to such a method, after the switching/transformation of the SBFD symbols to the non-SBFD symbols, the symbols are located in an order of non-SBFD symbols, SBFD symbols, and non-SBFD symbols within the period P. Accordingly, a transition between the SBFD symbol and the non-SBFD symbol occurs only twice within the period P.

If, as in (b) of FIG. 19, the switching/transformation of the SBFD symbols to the non-SBFD symbols is performed in the middle of the SBFD symbols, after the switching/transformation, the symbols are located in an order of non-SBFD symbols, SBFD symbol(s), non-SBFD symbol(s), SBFD symbol(s), and non-SBFD symbols within the period P. That is, the transition between the SBFD symbol and the non-SBFD symbol occurs four times. This has problems in that operational complexity of a base station and the UE increases and overhead due to a transition period increases.

Accordingly, the present disclosure proposes switching (transforming) some of the SBFD symbols to the non-SBFD symbols in a method as in (a) of FIG. 19. Hereinafter, referring to FIG. 19 means referring to (a) of FIG. 19.

Hereinafter, information indicated to the UE from the base station for the aforementioned dynamic SBFD operation and a method of determining information on symbols switched to the non-SBFD by the UE according to the information will be described.

For the dynamic SBFD operation, the UE receives all or some of following pieces of information from a network, and may determine the information on the symbols switched to the non-SBFD based on such an indication.

The UE can be indicated with the aforementioned 'a' (refer to FIG. 19) or a value corresponding to 'a' or information from which a value of 'a' can be interpreted/inferred. Specifically, such information can be as follows.

Alt 1-1. The UE can be indicated with the value of 'a', i.e., the number of symbols switched to the non-SBFD symbols. In this case, the UE may determine that 'a' consecutive SBFD symbols from symbol #n are switched to the non-SBFD symbols based on a start point of the period (e.g., symbol #0 in FIG. 19, the same applies hereinafter).

Alt 1-2. The UE can be indicated with a value corresponding to 'a-1'. In this case, the UE may determine that 'a' consecutive SBFD symbols from symbol #n to symbol #n+a-1 are switched to the non-SBFD symbols based on the start point of the period.

Alt 1-3. The UE can be indicated with a value corresponding to 'n+a-1'. In this case, the UE may determine that 'a' consecutive SBFD symbols from symbol #n to symbol #n+a-1 are switched to the non-SBFD symbols based on the start point of the period. The UE may determine that consecutive symbols from a start symbol of the period (i.e., symbol #0) to symbol #n+a-1 are used as the non-SBFD symbols.

The UE can be indicated with the aforementioned 'b' (refer to FIG. 19) or a value corresponding to 'b' or information from which a value of 'b' can be interpreted/inferred. Specifically, such information can be as follows.

Alt 2-1. The UE can be indicated with the value of 'b', i.e., the number of symbols switched to the non-SBFD symbols. In this case, the UE may determine that 'b' consecutive SBFD symbols from symbol #n+d in the reverse time order are switched to the non-SBFD symbols based on the start point of the period (e.g., symbol #0).

Alt 2-2. The UE can be indicated with a value corresponding to 'b-1'. In this case, the UE may determine that 'b' consecutive SBFD symbols from symbol #n+d-(b-1) to symbol #n+d are switched to the non-SBFD symbols based on the start point of the period.

Alt 2-3. The UE can be indicated with a value corresponding to 'n+d-(b-1)'. In this case, the UE determines that 'b' consecutive SBFD symbols from symbol #n+d-(b-1) to symbol #n+d are switched to the non-SBFD symbols based on the start point of the period. That is, the UE determines that consecutive symbols from symbol #n+d-(b-1) to a last symbol of the period are used as the non-SBFD symbols.

Based on such an indication, the UE determines that 'a' consecutive SBFD symbols from symbol #n to symbol #n+a-1 among symbols determined as the SBFD symbols are used as the non-SBFD symbols and performs transmission/reception of a signal/channel. And/or the UE determines that 'b' consecutive SBFD symbols from symbol #n+d-(b-1) to symbol #n+d are used as the non-SBFD symbols and performs transmission/reception of the signal/channel.

Additionally/independently, in a case where dynamical switching a symbol semi-statically configured/determined as a non-SBFD symbol to an SBFD symbol is allowed, for the dynamic SBFD operation as described above, the UE receives all or some of following pieces of information from the network and may determine the information on the symbols switched to the non-SBFD based on such an indication.

The UE can be indicated with a' or a value corresponding to a' or information from which a value of a' can be interpreted/inferred. Specifically, such information can be as follows.

Alt 1-1. The UE can be indicated with the value of a', i.e., the number of symbols switched to the SBFD symbols. In this case, the UE may determine that a' consecutive non-SBFD symbols from symbol #n-1 in the reverse time order are switched to the SBFD symbols based on the start point of the period.

Alt 1-2. The UE can be indicated with a value corresponding to a'-1. In this case, the UE may determine that a' consecutive non-SBFD symbols from symbol #n-1 to symbol #n-1-(a'-1) in the reverse time order are switched to the SBFD symbols based on the start point of the period.

Alt 1-3. The UE can be indicated with a value corresponding to n-a'. In this case, the UE may determine that a' consecutive non-SBFD symbols from symbol #n-1 to symbol #n-a' in the reverse time order are switched to the SBFD symbols based on the start point of the period.

The UE can be indicated with b' or a value corresponding to b' or information from which a value of b' can be interpreted/inferred. Specifically, such information can be as follows.

Alt 2-1. The UE can be indicated with the value of b', i.e., the number of symbols switched to the SBFD symbols. In this case, the UE may determine that b' consecutive non-SBFD symbols from symbol #n+d+1 are switched to the SBFD symbols based on the start point of the period.

Alt 2-2. The UE can be indicated with a value corresponding to b'-1. In this case, the UE may determine that b' consecutive non-SBFD symbols from symbol #n+d+1 to symbol #n+d+1+(b'-1) are switched to the SBFD symbols based on the start point of the period.

Alt 2-3. The UE can be indicated with a value corresponding to n+d+b'. In this case, the UE may determine that b' consecutive non-SBFD symbols from symbol #n+d+1 to symbol #n+d+b' are switched to the SBFD symbols based on the start point of the period.

Based on such an indication, the UE determines that a' consecutive non-SBFD symbols from symbol #n-a' to symbol #n-1 among symbols determined as the non-SBFD symbols are used as the SBFD symbols and performs transmission/reception of the signal/channel. And/or the UE determines that b' consecutive non-SBFD symbols from symbol #n+d+1 to symbol #n+d+b' are used as the SBFD symbols and performs transmission/reception of the signal/channel.

Hereinafter, a method in which the UE receives indication information for the dynamic SBFD operation as described above by signaling from the network will be described.

The UE can be indicated with the information as described above through RRC signaling, MAC-CE signaling, and/or DCI signaling from the network.

In this case, the UE can be directly indicated with the information(s) applied by the UE through the signaling from the network.

And/or the UE can be indicated with a plurality of candidate values that can be applied by the UE for each of the information(s) from the network through the RRC signaling or the like. Thereafter, information on a value actually applied by the UE among the plurality of candidate values can be indicated through the MAC-CE signaling and/or the DCI signaling.

And/or the UE can be indicated with the information as described above as much as a plurality of configuration sets from the network. Each configuration set may comprise a plurality of pieces of information for determining a position of a symbol switched to the non-SBFD as described above. Such configuration sets can be indicated through the RRC signaling or the like. Thereafter, the UE can be indicated with information on a configuration set actually applied by the UE among the plurality of configuration sets from the network through the MAC-CE signaling and/or the DCI signaling.

Hereinafter, a method in which the UE determines a time interval to which the indication information for the dynamic SBFD operation as described above is applied will be described.

The aforementioned indication may be applied only during a continuous time interval or some time intervals based on a point in time when the UE receives the indication. More specifically, such an indication may be applied during time intervals as follows.

Alt a. It may be periodically applied continuously from a start point of a nearest period after the point in time when the UE receives such indication information. More specifically, if the UE receives such indication information in slot #m, such information may be periodically applied from a start point of the nearest period after slot #m, slot #m+1, or slot #m+z. Such an indication may be continuously applied until the UE receives and applies a corresponding next indication. Additionally, a period in which such indication information is applied may be the same as P or Q. In this case, specifically, Q may be same as q*P. That is, when the period of semi-static SBFD configuration information is P, indication information for the operation of the dynamic SBFD may be periodically applied once every q periods of the semi-static SBFD configuration information. Characteristically, such a q value may always be equal to 1.

Alt b. It may be applied once for the nearest period after the point in time when the UE receives such indication information. More specifically, if the UE receives such indication information in slot #m, such information may be applied to one nearest period after slot #m, slot #m+1, or slot #m+z.

Alt c. It may be applied once for a specific period/specific interval after the point in time when the UE receives such indication information. More specifically, if the UE receives such indication information in slot #m, such information may be applied to a K-th period based on the nearest period after slot #m, slot #m+1, or slot #m+z.

Alt d. It may be applied during a specific time interval after the point in time when the UE receives such indication information. More specifically, if the UE receives such indication information in slot #m, such information may be applied from the K-th period to a K+L-th period based on the nearest period after slot #m, slot #m+1, or slot #m+z. Characteristically, such a K value may always be equal to 0.

The period in the above may mean a period interval of position information of the SBFD symbol semi-statically configured/determined by the UE.

For the operation as described above, the UE may be configured with a value corresponding to the z from the network through RRC and/or DCI signaling.

Additionally/independently, for the operation as described above, the UE may be configured with a value corresponding to Q or a value corresponding to q from the network through RRC, MAC-CE, and/or DCI signaling.

Additionally/independently, for the operation as described above, the UE may be configured with a value corresponding to K from the network through RRC, MAC-CE, and/or DCI signaling.

Additionally/independently, for the operation as described above, the UE may be configured with a value corresponding to L from the network through RRC, MAC-CE, and/or DCI signaling.

As another method for determining the time interval to which such an indication is applied, the UE may be configured with indication information for the operation of the dynamic SBFD as described above from the network through RRC signaling and/or MAC-CE signaling or the like, and thereafter, the UE may be indicated with activation/deactivation information of the indication information configured from the network through MAC-CE signaling and/or DCI signaling or the like.

When the UE is indicated with the activation information from the network, the UE may periodically apply the configured indication information for the operation of the dynamic SBFD as in the Alt a.

When the UE is indicated with the deactivation information from the network, the UE may stop applying the indication information for the operation of the dynamic SBFD.

Additionally, the UE may be configured with as many as a plurality of sets of indication information for the operation of the dynamic SBFD from the network through RRC signaling and/or MAC-CE signaling or the like, and thereafter, the UE may be indicated with an index of a configuration information set to which the activation/deactivation information is applied together with the activation/deactivation information of the indication information configured from the network through MAC-CE signaling and/or DCI signaling or the like.

Additionally, when the activation information is indicated to the UE, a Q or q value for determining the period to which the indication information is applied may be indicated together. Alternatively, the Q or q value for determining the period to which the indication information is applied may be configured by being comprised in the indication information for the operation of the dynamic SBFD configured for the UE from the network through RRC signaling and/or MAC-CE signaling or the like.

Hereinafter, a method for being indicated with a plurality of sets of indication information for the dynamic SBFD operation as described above and applying each set to different time intervals will be described.

In addition to the method in which the UE determines the time interval to which the indication information for the operation of the dynamic SBFD as described above is applied, the UE may be indicated with as many as a plurality of sets of the indication information as described above from the network. In this case, different configuration sets may be applied to different periods. Such a plurality of configuration sets may be indicated through same signaling (for example, through same DCI).

More specifically, the UE may be indicated with M configuration sets from the network. At this time, the UE may determine that such configuration sets are sequentially applied to M consecutive periods. For example, an m-th configuration set may be applied for an m-th period.

Alternatively, the UE may be indicated with M configuration sets, and for each configuration set, an L value to which a corresponding configuration set is applied may be jointly indicated. In this case, when the UE receives the L value applied to the corresponding configuration set for each configuration set, the UE may apply the corresponding configuration set to an L-th period.

### Proposed Method 2.

Proposed Method 2 is a method in which, when consecutive symbols are configured as SBFD symbols and remaining symbols are configured as non-SBFD symbols within one period P, all SBFD symbols existing within a specific time interval (e.g., period P) are (dynamically) switched to non-SBFD symbols.

At this time, the period P may be the same as the period of the SBFD symbol position information semi-statically configured/determined by the UE (or the period configured by TDD-UL-DL-ConfigCommon).

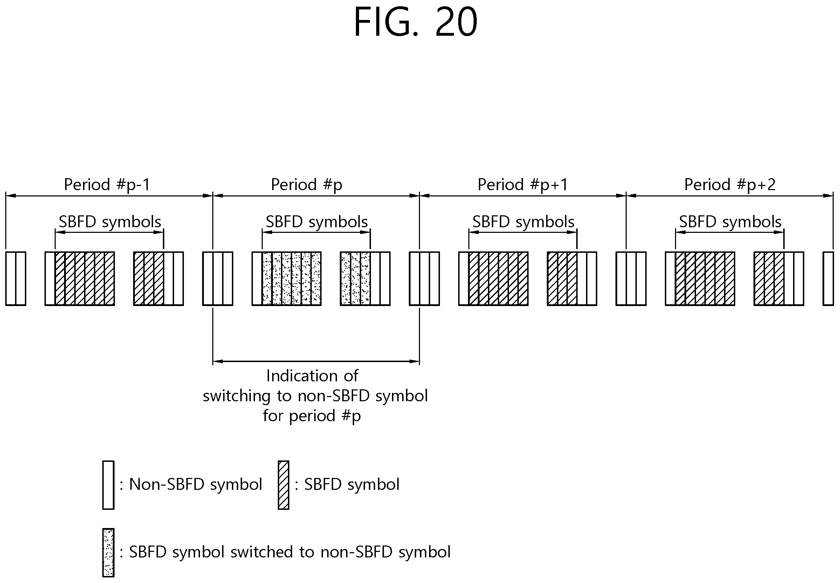

FIG. 20 illustrates a method for switching some of SBFD symbols to non-SBFD symbols according to Proposed Method 2.

Referring to FIG. 20, in a plurality of periods (e.g., period #p-1, period #p, period #p+1, period #p+2) each having a period P, some consecutive symbols within each period are configured as SBFD symbols and remaining symbols are configured as non-SBFD symbols. At this time, by a specific indication, all SBFD symbols existing within a time interval corresponding to a specific period (e.g., period #p) among the plurality of periods may be switched/transformed to non-SBFD symbols.

That is, when it is necessary to switch some of the SBFD symbols configured in the plurality of periods to non-SBFD symbols, all SBFD symbols within a specific period (e.g., period #p) among the plurality of periods are switched/transformed to non-SBFD symbols.

Such a method has advantages that signaling overhead is small and operational complexity may be lowered.

Hereinafter, a method in which a UE receives information from a base station for the operation of the dynamic SBFD as described above and determines information on symbols switched to the non-SBFD accordingly will be described.

For the dynamic SBFD operation as described above, the UE may be indicated with all or some of the following information from a network, and may determine the information on the symbols switched to the non-SBFD based on such an indication.

The UE may be indicated with a position of a period performing switching to the non-SBFD symbol, i.e., a p value which is an index value of the period, or information from which the corresponding value may be interpreted/inferred.

The UE may be indicated with information from which a length Q value of the period performing the switching to the non-SBFD symbol may be interpreted/inferred. Characteristically, such a Q value may be equal to q*P. For the operation as described above, the UE may be configured with a value corresponding to Q or a value corresponding to q from the network. Or characteristically, such a q value may always be equal to 1 (i.e., Q may be equal to P, which is the period of the SBFD symbol position information semi-statically configured/determined).

Based on such an indication, the UE determines that SBFD symbols existing within the period #p among symbols indicated as SBFD symbols are used as non-SBFD symbols and may perform transmission/reception of a signal/channel.

Hereinafter, a method in which the UE receives indication information for the operation of the dynamic SBFD as described above by signaling from the network will be described.

The UE may be indicated with the information as described above through RRC signaling, MAC-CE signaling, and/or DCI signaling from the network. In this case, the UE may be directly indicated with the information(s) applied by the UE through the signaling from the network.

And/or the UE may be indicated with a plurality of candidate values that may be applied by the UE for each of the information(s) from the network through the RRC signaling or the like. Thereafter, information on a value actually applied by the UE among the plurality of candidate values may be indicated through the MAC-CE signaling and/or the DCI signaling.

Hereinafter, a method for determining a time resource corresponding to the period #p when it is determined that the SBFD symbols existing within the period #p are used as the non-SBFD symbols through the indication information for the dynamic SBFD operation as described above will be described.

The UE may determine the position of the period #p based on a point in time when the UE receives the indication as described above.

Alt a. The position of the period #p may be determined based on a start point of a nearest period after the point in time when the UE receives such indication information. More specifically, if the UE receives such indication information in slot #m, such information may be applied to a p-th period based on the point in time when the nearest period after slot #m, slot #m+1, or slot #m+z starts. At this time, each period may be equal to the Q.

Alt b. The position of the period #p may be determined based on a start point of a nearest period set after the point in time when the UE receives such indication information. If the UE receives such indication information in slot #m, such information may be applied to the p-th period based on the point in time when the nearest period set after slot #m, slot #m+1, or slot #m+z starts. A period set means a time interval comprising a plurality of consecutive periods, and one period set may consist of Z periods. When a length of each period is equal to Q, a length of each period set is equal to Z*Q, and such a period set may exist periodically.

Alt c. The position of the period #p may be periodically determined based on the start point of the nearest period set after the point in time when the UE receives such indication information. If the UE receives such indication information in slot #m, such information may be applied to the p-th period based on the point in time when the nearest period set after slot #m, slot #m+1, or slot #m+z starts, and such an indication may be periodically applied every Z periods. A period set means a time interval comprising a plurality of consecutive periods, and one period set may consist of Z periods. When the length of each period is equal to Q, the length of each period set is equal to Z*Q, and such a period set may exist periodically.

The period in the above may mean a period interval of the SBFD symbol position information semi-statically configured for the UE.

For the operation as described above, the UE may be configured with a value corresponding to Z or a value corresponding to Z*Q from the network through RRC, MAC-CE, and/or DCI signaling.

As another method for determining the position of the period #p to which such an indication is applied, the UE may be configured with indication information for the operation of the dynamic SBFD as described above from the network through RRC signaling and/or MAC-CE signaling or the like, and thereafter, the UE may be indicated with activation/deactivation information of the indication information configured from the network through MAC-CE signaling and/or DCI signaling or the like.

When the UE is indicated with the activation information from the network, the UE may periodically apply the configured indication information for the operation of the dynamic SBFD as in the Alt c.

When the UE is indicated with the deactivation information from the network, the UE may stop applying the indication information for the operation of the dynamic SBFD.

Additionally, the UE may be configured with as many as a plurality of sets of indication information for the operation of the dynamic SBFD from the network through RRC signaling and/or MAC-CE signaling or the like, and thereafter, the UE may be indicated with an index of a configuration information set to which the activation/deactivation information is applied together with the activation/deactivation information of the indication information configured from the network through MAC-CE signaling and/or DCI signaling or the like.

Additionally, when the activation information is indicated to the UE, a Z or Z*Q value for determining the period to which the indication information is applied may be indicated together. Alternatively, the Z or Z*Q value for determining the period to which the indication information is applied may be configured by being comprised in the indication information for the operation of the dynamic SBFD configured for the UE from the network through RRC signaling and/or MAC-CE signaling or the like.

Hereinafter, a method for being indicated with a plurality of pieces of information on p values for the dynamic SBFD operation as described above will be described. Although such a p value means the index of the period, it may be replaced with other information from which the position information of the period performing the switching to the non-SBFD may be interpreted/inferred. Information on such a plurality of p values may be indicated through same signaling (for example, through same DCI).

The UE may be independently indicated with a plurality of p values from the network. When such information is signaled through the DCI, the plurality of p values may be indicated through different DCIs. Alternatively, the plurality of p values may be indicated through same DCI, but may be indicated through fields independent of each other.

Alternatively, the plurality of p values may be combined and indicated as one piece of information. When such information is signaled through the DCI, the UE may be indicated with the plurality of p values through a same field within the same DCI from the network.

For example, the plurality of p values may be indicated in a bitmap format. The UE receives a bitmap consisting of Z-bits from the network, and may interpret/determine a position of a bit where 1 is indicated (or 0 is indicated) as the value of p. For example, in a case where 2nd and 4th bits among 5 bits constituting the bitmap are indicated as 1, the UE may determine that two p values are indicated and the two p values are 2 and 4.

Alternatively, when a plurality of p values constitute one set, the UE may be configured with information on a plurality of sets and a plurality of p values constituting each set from the network. Along with this, the UE may be configured with an index value corresponding to each set from the network. Thereafter, the UE may be indicated with the index value corresponding to a specific set applied by the UE through signaling such as MAC-CE and/or DCI from the network.

For the operation as described above, the UE may be configured with a value corresponding to Z from the network through RRC and/or DCI signaling.

When the UE is indicated with a plurality of p values (i.e., p1, p2, ..., pM) through the indication as described above, the UE may determine that SBFD symbols existing in time intervals corresponding to period #p1, period #p2, ..., and period #pM are switched/transformed to non-SBFD symbols.

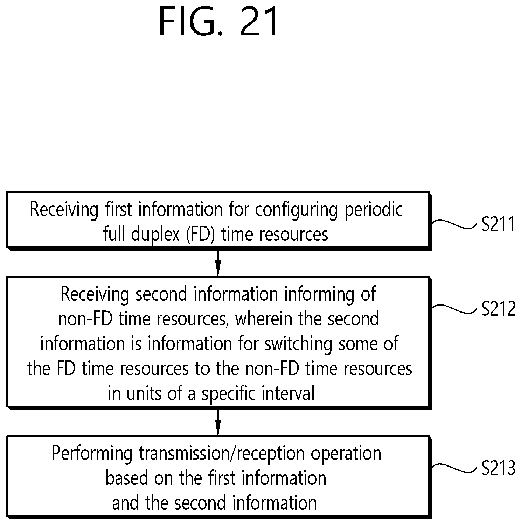

FIG. 21 illustrates an operating method of a UE in a wireless communication system.

Referring to FIG. 21, the UE receives first information for configuring periodic full duplex (FD) time resources (S211).

The UE receives second information informing of non-FD time resources, wherein the second information is information for switching some of the FD time resources to the non-FD time resources in units of a specific interval (e.g., P) (S212).

For example, the second information may take a specific time interval called P as an indication unit. The second information may be information for indicating or informing of switching some or all of SBFD time resources within a specific interval to non-SBFD time resources in a situation where a plurality of intervals each having a time length of P are consecutive, for a specific interval among the plurality of intervals. In this sense, the second information may be referred to as information for informing of resource switching in units of the specific interval (P).

The specific interval may be, for example, a TDD (time division duplex) period provided by TDD configuration information or a time interval equal to a multiple of the TDD period. The TDD configuration information may be, for example, 'TDD-UL-DL-ConfigCommon' determining a cell-specific uplink/downlink TDD configuration. Such TDD configuration information can inform of a period of a downlink-uplink pattern (also referred to as an uplink-downlink pattern), which may be referred to as a TDD period. And information informing of the TDD period may be referred to as TDD period information.

The UE performs a transmission and reception operation based on the first information and the second information (S213).

For example, the FD time resources may be a plurality of consecutive symbols within the specific interval P as described in FIGS. 18 and 19. At this time, a time resource switched to the non-FD time resource among the FD time resources may comprise N1 (N1 is a natural number) consecutive symbols from a first symbol among the plurality of symbols and N2 (N2 is a natural number) consecutive symbols from a last symbol among the plurality of symbols.

An example of the non-FD time resource has been described above with reference to FIG. 19. That is, a plurality of SBFD symbols may exist within the period P interval, and in this case, 'a' (corresponding to the N1) SBFD symbols from a first SBFD symbol (191) and 'b' (corresponding to the N2) SBFD symbols in the reverse time order from a last SBFD symbol (192) among the plurality of SBFD symbols may be switched/transformed to non-SBFD symbols.

The second information may comprise information related to the N1 and information related to the N2.

According to an embodiment, the UE may be configured with candidate values of the N1 and the N2 through a radio resource control (RRC) message, and may receive information indicating at least one of the candidate values through at least one of a media access control (MAC) control element (CE) and downlink control information (DCI).

For example, a first list of the candidate values of the N1 and a second list of the candidate values of the N2 may be configured through an RRC message which is a higher layer signal. The first list may have M1 candidate values, and the second list may have M2 candidate values. M1 and M2 are natural numbers. Information indicating an m1-th (m1 is any one of natural numbers from 1 to M1) value in the first list and information indicating an m2-th (m2 is any one of natural numbers from 1 to M2) value in the second list may be indicated through at least one of the MAC CE and the DCI.

According to an embodiment, a list comprising a plurality of combinations of the candidate value of the N1 and the candidate value of the N2 may be configured through the RRC message, and information indicating at least one of the combinations of the candidate values may be received through at least one of the MAC CE and the DCI.

An operation of switching some of the FD time resources to the non-FD time resources may be performed with the aforementioned TDD period, for example, the period of a time division duplex (TDD) uplink-downlink pattern as a minimum unit. For example, when SBFD symbols are configured in units of the period P and some of the SBFD symbols within the period P are switched to non-FD symbols as in FIG. 19, the period P may mean a TDD UL-DL pattern period or a multiple of the TDD UL-DL pattern period. The TDD UL-DL pattern period may be configured by, for example, 'TDD-UL-DL-ConfigCommon' determining the cell-specific UL/DL TDD configuration.

The following table is an example of 'TDD-UL-DL-ConfigCommon'.

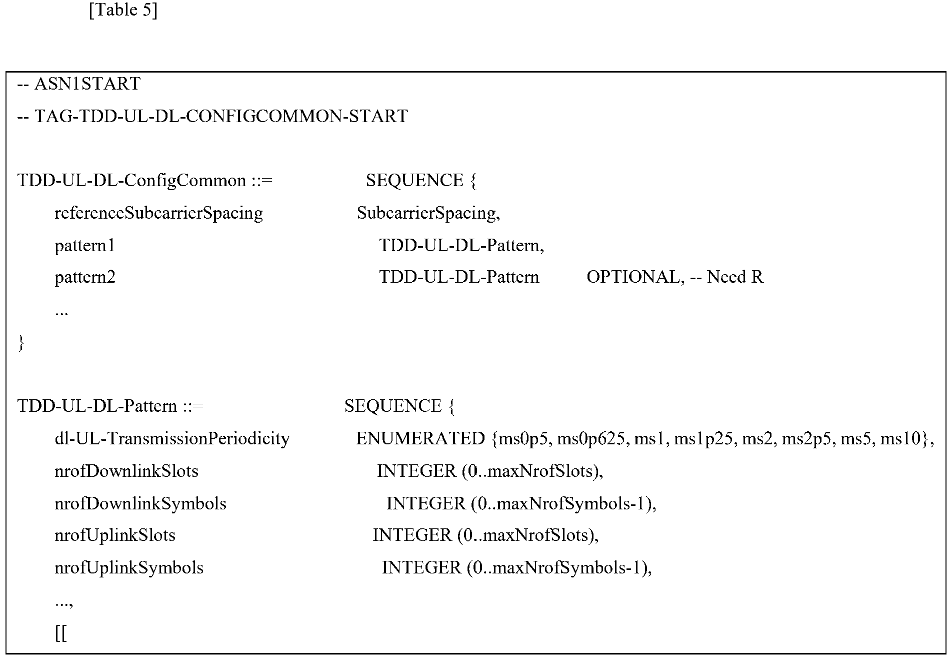

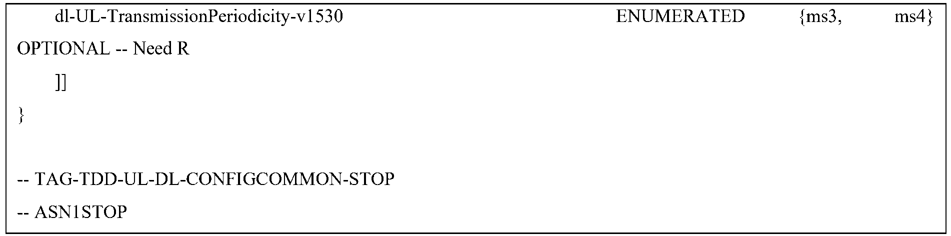

In the table above, 'dl-UL-TransmissionPeriodicity' informs of a period of the aforementioned TDD UL-DL pattern (hereinafter can be abbreviated as a UL-DL pattern). 'dl-UL-TransmissionPeriodicity' may be an example of TDD period information. 'nrofDownlinkSlots' informs of the number of consecutive full downlink slots at a beginning of each UL-DL pattern. A full downlink slot may be a slot in which all symbols within the slot are downlink symbols. 'nrofDownlinkSymbols' informs of the number of consecutive downlink symbols at a beginning of a slot following a last full downlink slot. 'nrofUplinkSlots' informs of the number of consecutive full uplink slots at an end of each UL-DL pattern. A full uplink slot may be a slot in which all symbols within the slot are uplink symbols. 'nrofUplinkSymbols' informs of the number of consecutive uplink symbols at an end of a slot preceding a first full uplink slot.

According to an embodiment, the FD time resources may be semi-statically configured by a higher layer signal. On the other hand, the non-FD time resource may be dynamically indicated by DCI.

According to an embodiment, in a case where the FD time resources are configured in a plurality of periods, the non-FD time resource may comprise all FD time resources comprised in any one of the plurality of periods. Such an operation has been described above with reference to FIG. 20. That is, as shown in FIG. 20, in a case where some consecutive symbols within each period are configured as SBFD symbols and remaining symbols are configured as non-SBFD symbols in a plurality of periods (e.g., period #p-1, period #p, period #p+1, period #p+2), the second information may indicate or inform of any one period (e.g., period #p) among the plurality of periods. Then, the UE may perform a transmission and reception operation with a network after switching/transforming all SBFD symbols existing in the any one period (e.g., period #p) to non-SBFD symbols. Here, for convenience of description, a case where the second information indicates any one period among the plurality of periods is exemplified, but this is not a limitation. That is, the second information may indicate two or more periods among the plurality of periods.

According to the method described in FIG. 21, in switching the FD time resource (e.g., SBFD time resource) to the non-FD time resource (e.g., non-SBFD time resource), there is an advantage that the number of occurrences of transition between the FD time resource and the non-FD time resource may be reduced.

That is, according to the method according to the present disclosure, in a case of supporting a fallback operation of switching and using a time resource configured as an SBFD resource to a non-SBFD resource, a frequency of occurrence of transition between the SBFD time resource and the non-SBFD time resource may be lowered. Accordingly, increasing of operational complexity between devices may be prevented, and reduction of throughput due to frequent transition periods may also be prevented.

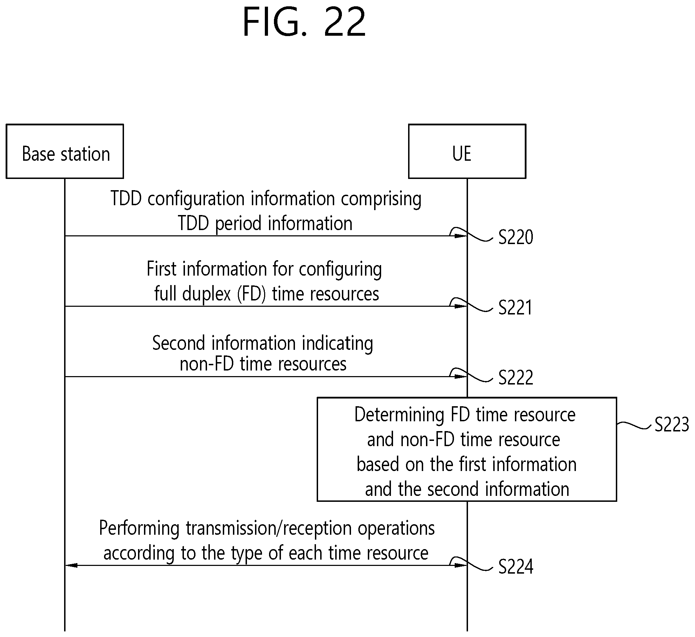

FIG. 22 illustrates an example in which a base station and a UE operate in a wireless communication system according to the method of FIG. 21.

Referring to FIG. 22, the base station provides TDD configuration information comprising TDD period information to the UE (S220).

The base station transmits first information for configuring periodic full duplex (FD) time resources to the UE (S221).

The base station transmits second information informing of non-FD time resources to the UE (S222). The second information may mean information related to switching some of the FD time resources to the non-FD time resources in units of a specific interval, and the specific interval may be, for example, a TDD period provided by the TDD configuration information or equal to a multiple of the TDD period. This has already been described above with reference to FIG. 21.

The UE determines the FD time resource and the non-FD time resource based on the first information and the second information (S223). Such a determination process has been described above in FIGS. 19 and 20.

The base station and the UE perform transmission and reception operations according to a type of each time resource (i.e., whether it is the FD time resource or the non-FD time resource) (S224).

In the example of FIG. 22, a case where the first information is provided separately from the TDD configuration information is described, but the first information may be provided to the UE by being comprised in the TDD configuration information.

Also, in the example of FIG. 22, a case where the first information and the second information are separately provided through different signals is described, but they may be provided by being comprised in a same signal.

The TDD configuration information and the first information may be provided by an RRC signal, and the second information may be provided by a MAC CE and/or DCI. A specific example of such an operation has been described above with reference to FIG. 21. Alternatively, both the first and second information may be provided by a higher layer signal such as the RRC signal.

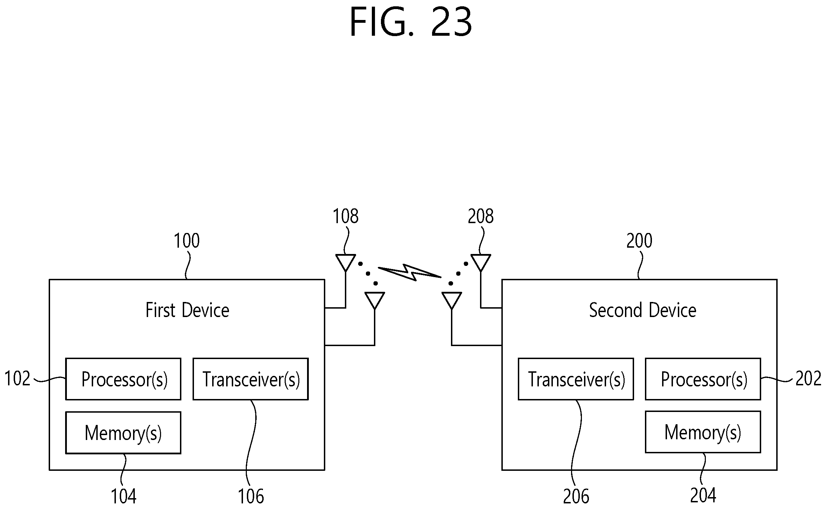

FIG. 23 illustrates a wireless device applicable to the present specification.

Referring to FIG. 23, a first wireless device 100 and a second wireless device 200 may transmit radio signals through a variety of RATs (e.g., LTE and NR).

The first wireless device 100 may include one or more processors 102 and one or more memories 104 and additionally further include one or more transceivers 106 and/or one or more antennas 108. The processors 102 may control the memory 104 and/or the transceivers 106 and may be configured to implement the descriptions, functions, procedures, proposals, methods, and/or operational flowcharts disclosed in this document. For example, the processors 102 may process information within the memory 104 to generate first information/signals and then transmit radio signals including the first information/signals through the transceivers 106. In addition, the processor 102 may receive radio signals including second information/signals through the transceiver 106 and then store information obtained by processing the second information/signals in the memory 104. The memory 104 may be connected to the processory102 and may store a variety of information related to operations of the processor 102. For example, the memory 104 may store software code including commands for performing a part or the entirety of processes controlled by the processor 102 or for performing the descriptions, functions, procedures, proposals, methods, and/or operational flowcharts disclosed in this document. Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. The transceiver 106 may include a transmitter and/or a receiver. The transceiver 106 may be interchangeably used with a radio frequency (RF) unit. In the present specification, the wireless device may represent a communication modem/circuit/chip. The processor 102 receives first information for configuring periodic full duplex (FD) time resources, receives second information indicating non-FD time resources and performs a transmission and reception operation based on the first information and the second information. The second information is information for switching some of the FD time resources to the non-FD time resources in units of a specific period. The specific period is a time interval equal to a time division duplex (TDD) period provided by TDD configuration information or a multiple of the TDD period.

The second wireless device 200 may include one or more processors 202 and one or more memories 204 and additionally further include one or more transceivers 206 and/or one or more antennas 208. The processor 202 may control the memory 204 and/or the transceiver 206 and may be configured to implement the descriptions, functions, procedures, proposals, methods, and/or operational flowcharts disclosed in this document. For example, the processor 202 may process information within the memory 204 to generate third information/signals and then transmit radio signals including the third information/signals through the transceiver 206. In addition, the processor 202 may receive radio signals including fourth information/signals through the transceiver 206 and then store information obtained by processing the fourth information/signals in the memory 204. The memory 204 may be connected to the processor 202 and may store a variety of information related to operations of the processor 202. For example, the memory 204 may store software code including commands for performing a part or the entirety of processes controlled by the processor 202 or for performing the descriptions, functions, procedures, proposals, methods, and/or operational flowcharts disclosed in this document. Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. The transceiver 206 may include a transmitter and/or a receiver. The transceiver 206 may be interchangeably used with an RF unit. In the present specification, the wireless device may represent a communication modem/circuit/chip. The processor 202 transmits first information for configuring periodic full duplex (FD) time resources to a user equipment (UE), transmits second information indicating non-FD time resources to the UE and communicates with the UE based on the first information and the second information. The second information is information for switching some of the FD time resources to the non-FD time resources in units of a specific period. The specific period is a time interval equal to a time division duplex (TDD) period provided by TDD configuration information or a multiple of the TDD period.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. For example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The one or more processors 102 and 202 may be implemented with at least one computer readable medium (CRM) including instructions to be executed by at least one processor.

That is, at least one computer-readable medium (CRM) including instructions based on being executed by at least one processor performs the steps of receiving first information for configuring periodic full duplex (FD) time resources, receiving second information indicating non-FD time resources and performing a transmission and reception operation based on the first information and the second information. The second information is information for switching some of the FD time resources to the non-FD time resources.

The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. In addition, the one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. In addition, the one or more processors 102 and 202 may perform control so that the one or more transceivers 106 and 206 may receive user data, control information, or radio signals from one or more other devices. In addition, the one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

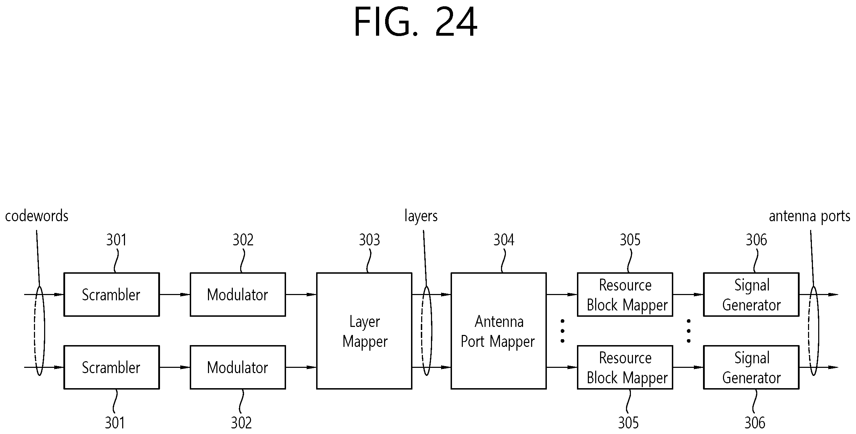

FIG. 24 shows an example of a structure of a signal processing module. Herein, signal processing may be performed in the processors 102 and 202 of FIG. 23.

Referring to FIG. 24, the transmitting device (e.g., a processor, the processor and a memory, or the processor and a transceiver) in a UE or BS may include a scrambler 301, a modulator 302, a layer mapper 303, an antenna port mapper 304, a resource block mapper 305, and a signal generator 306.

The transmitting device can transmit one or more codewords. Coded bits in each codeword are scrambled by the corresponding scrambler 301 and transmitted over a physical channel. A codeword may be referred to as a data string and may be equivalent to a transport block which is a data block provided by the MAC layer.

Scrambled bits are modulated into complex-valued modulation symbols by the corresponding modulator 302. The modulator 302 can modulate the scrambled bits according to a modulation scheme to arrange complex-valued modulation symbols representing positions on a signal constellation. The modulation scheme is not limited and m-PSK (m-Phase Shift Keying) or m-QAM (m-Quadrature Amplitude Modulation) may be used to modulate the coded data. The modulator may be referred to as a modulation mapper.

The complex-valued modulation symbols can be mapped to one or more transport layers by the layer mapper 303. Complex-valued modulation symbols on each layer can be mapped by the antenna port mapper 304 for transmission on an antenna port.

Each resource block mapper 305 can map complex-valued modulation symbols with respect to each antenna port to appropriate resource elements in a virtual resource block allocated for transmission. The resource block mapper can map the virtual resource block to a physical resource block according to an appropriate mapping scheme. The resource block mapper 305 can allocate complex-valued modulation symbols with respect to each antenna port to appropriate subcarriers and multiplex the complex-valued modulation symbols according to a user.

Signal generator 306 can modulate complex-valued modulation symbols with respect to each antenna port, that is, antenna-specific symbols, according to a specific modulation scheme, for example, OFDM (Orthogonal Frequency Division Multiplexing), to generate a complex-valued time domain OFDM symbol signal. The signal generator can perform IFFT (Inverse Fast Fourier Transform) on the antenna-specific symbols, and a CP (cyclic Prefix) can be inserted into time domain symbols on which IFFT has been performed. OFDM symbols are subjected to digital-analog conversion and frequency up-conversion and then transmitted to the receiving device through each transmission antenna. The signal generator may include an IFFT module, a CP inserting unit, a digital-to-analog converter (DAC) and a frequency upconverter.

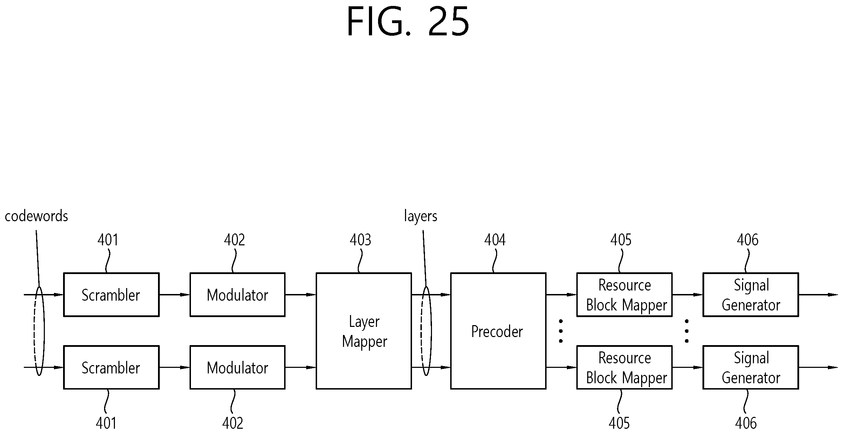

FIG. 25 shows another example of a structure of a signal processing module in a transmitting device. Herein, signal processing may be performed in a processor of a UE/BS, such as the processors 102 and 202 of FIG. 23.

Referring to FIG. 25, the transmitting device (e.g., a processor, the processor and a memory, or the processor and a transceiver) in the UE or the BS may include a scrambler 401, a modulator 402, a layer mapper 403, a precoder 404, a resource block mapper 405, and a signal generator 406.

The transmitting device can scramble coded bits in a codeword by the corresponding scrambler 401 and then transmit the scrambled coded bits through a physical channel.

Scrambled bits are modulated into complex-valued modulation symbols by the corresponding modulator 402. The modulator can modulate the scrambled bits according to a predetermined modulation scheme to arrange complex-valued modulation symbols representing positions on a signal constellation. The modulation scheme is not limited and pi/2-BPSK (pi/2-Binary Phase Shift Keying), m-PSK (m-Phase Shift Keying) or m-QAM (m-Quadrature Amplitude Modulation) may be used to modulate the coded data.

The complex-valued modulation symbols can be mapped to one or more transport layers by the layer mapper 403.

Complex-valued modulation symbols on each layer can be precoded by the precoder 404 for transmission on an antenna port. Here, the precoder may perform transform precoding on the complex-valued modulation symbols and then perform precoding. Alternatively, the precoder may perform precoding without performing transform precoding. The precoder 404 can process the complex-valued modulation symbols according to MIMO using multiple transmission antennas to output antenna-specific symbols and distribute the antenna-specific symbols to the corresponding resource block mapper 405. An output z of the precoder 404 can be obtained by multiplying an output y of the layer mapper 403 by an N x M precoding matrix W. Here, N is the number of antenna ports and M is the number of layers.

Each resource block mapper 405 maps complex-valued modulation symbols with respect to each antenna port to appropriate resource elements in a virtual resource block allocated for transmission.

The resource block mapper 405 can allocate complex-valued modulation symbols to appropriate subcarriers and multiplex the complex-valued modulation symbols according to a user.

Signal generator 406 can modulate complex-valued modulation symbols according to a specific modulation scheme, for example, OFDM, to generate a complex-valued time domain OFDM symbol signal. The signal generator 406 can perform IFFT (Inverse Fast Fourier Transform) on antenna-specific symbols, and a CP (cyclic Prefix) can be inserted into time domain symbols on which IFFT has been performed. OFDM symbols are subjected to digital-analog conversion and frequency up-conversion and then transmitted to the receiving device through each transmission antenna. The signal generator 406 may include an IFFT module, a CP inserting unit, a digital-to-analog converter (DAC) and a frequency upconverter.

The signal processing procedure of the receiving device may be reverse to the signal processing procedure of the transmitting device. Specifically, the processor of the transmitting device decodes and demodulates RF signals received through antenna ports of the transceiver. The receiving device may include a plurality of reception antennas, and signals received through the reception antennas are restored to baseband signals, and then multiplexed and demodulated according to MIMO to be restored to a data string intended to be transmitted by the transmitting device. The receiving device may include a signal restoration unit that restores received signals to baseband signals, a multiplexer for combining and multiplexing received signals, and a channel demodulator for demodulating multiplexed signal strings into corresponding codewords. The signal restoration unit, the multiplexer and the channel demodulator may be configured as an integrated module or independent modules for executing functions thereof. More specifically, the signal restoration unit may include an analog-to-digital converter (ADC) for converting an analog signal into a digital signal, a CP removal unit that removes a CP from the digital signal, an FET module for applying FFT (fast Fourier transform) to the signal from which the CP has been removed to output frequency domain symbols, and a resource element demapper/equalizer for restoring the frequency domain symbols to antenna-specific symbols. The antenna-specific symbols are restored to transport layers by the multiplexer and the transport layers are restored by the channel demodulator to codewords intended to be transmitted by the transmitting device.

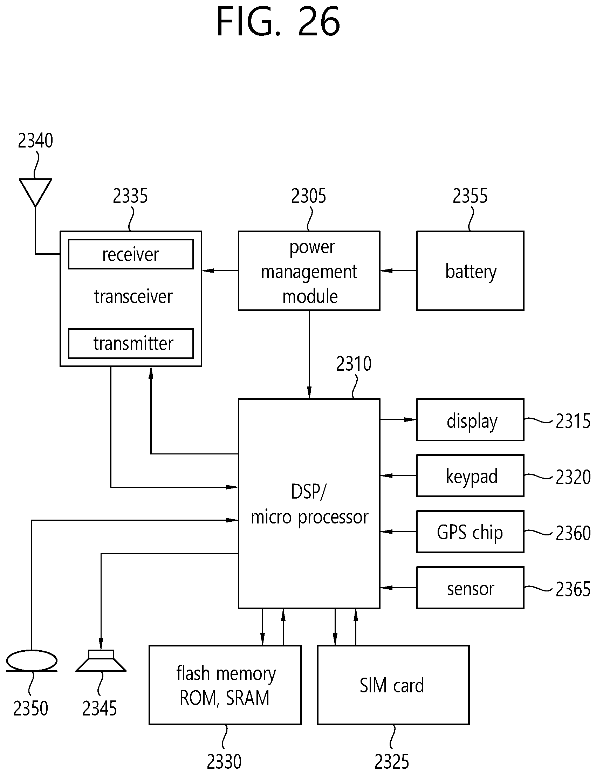

FIG. 26 illustrates an example of a wireless communication device according to an implementation example of the present disclosure.

Referring to FIG. 26, the wireless communication device, for example, a UE may include at least one of a processor 2310 such as a digital signal processor (DSP) or a microprocessor, a transceiver 2335, a power management module 2305, an antenna 2340, a battery 2355, a display 2315, a keypad 2320, a global positioning system (GPS) chip 2360, a sensor 2365, a memory 2330, a subscriber identification module (SIM) card 2325, a speaker 2345 and a microphone 2350. A plurality of antennas and a plurality of processors may be provided.

The processor 2310 can implement functions, procedures and methods described in the present description. The processor 2310 in FIG. 26 may be the processors 102 and 202 in FIG. 23.

The memory 2330 is connected to the processor 2310 and stores information related to operations of the processor. The memory may be located inside or outside the processor and connected to the processor through various techniques such as wired connection and wireless connection. The memory 2330 in FIG. 26 may be the memories 104 and 204 in FIG. 23.

A user can input various types of information such as telephone numbers using various techniques such as pressing buttons of the keypad 2320 or activating sound using the microphone 2350. The processor 2310 can receive and process user information and execute an appropriate function such as calling using an input telephone number. In some scenarios, data can be retrieved from the SIM card 2325 or the memory 2330 to execute appropriate functions. In some scenarios, the processor 2310 can display various types of information and data on the display 2315 for user convenience.

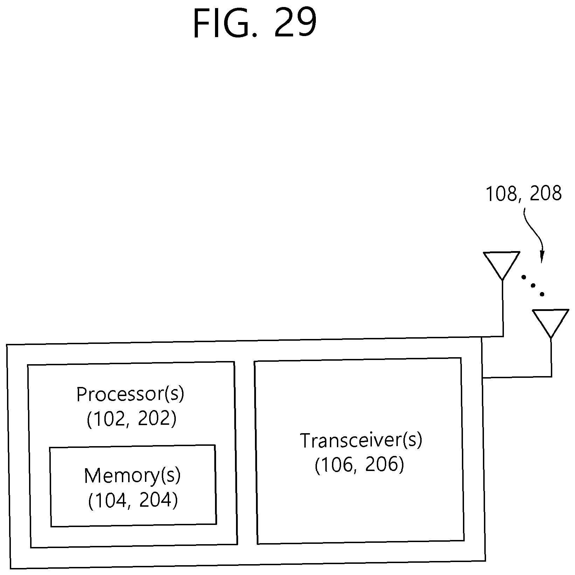

The transceiver 2335 is connected to the processor 2310 and transmit and/or receive RF signals. The processor can control the transceiver in order to start communication or to transmit RF signals including various types of information or data such as voice communication data. The transceiver includes a transmitter and a receiver for transmitting and receiving RF signals. The antenna 2340 can facilitate transmission and reception of RF signals. In some implementation examples, when the transceiver receives an RF signal, the transceiver can forward and convert the signal into a baseband frequency for processing performed by the processor. The signal can be processed through various techniques such as converting into audible or readable information to be output through the speaker 2345. The transceiver in FIG. 26 may be the transceivers 106 and 206 in FIG. 29.

Although not shown in FIG. 26, various components such as a camera and a universal serial bus (USB) port may be additionally included in the UE. For example, the camera may be connected to the processor 2310.

FIG. 26 is an example of implementation with respect to the UE and implementation examples of the present disclosure are not limited thereto. The UE need not essentially include all the components shown in FIG. 26. That is, some of the components, for example, the keypad 2320, the GPS chip 2360, the sensor 2365 and the SIM card 2325 may not be essential components. In this case, they may not be included in the UE.

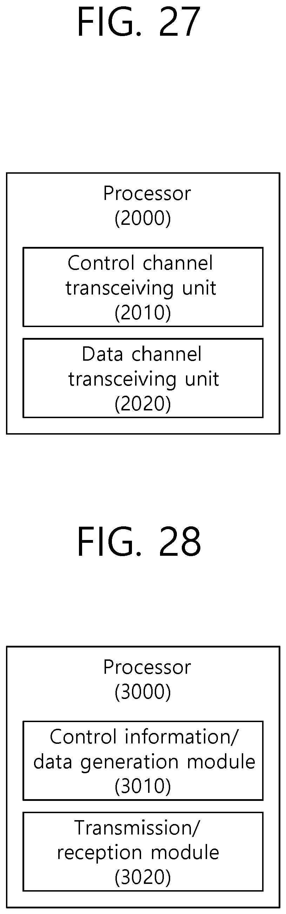

FIG. 27 shows an example of the processor 2000.

Referring to FIG. 27, The processor 2000 may include a control channel transceiver 2010 and a data channel transceiver 2020. For example, the processor 2000 may execute the methods described in FIGS. 16 to 22 from the UE perspective. The processor 2000 may be an example of the processors 102 and 202 of FIG. 23.

FIG. 28 shows an example of the processor 3000.

Referring to FIG. 28, The processor 3000 may include a control information/data generation module 3010 and a transmit/receive module 3020. The processor 3000 may execute the methods described in FIGS 16 to 22, for example, from the perspective of a base station or network. The processor 3000 may be an example of the processors 102, 202 of FIG. 23.

FIG. 29 shows another example of a wireless device.

Referring to FIG. 29, the wireless device may include one or more processors 102 and 202, one or more memories 104 and 204, one or more transceivers 106 and 206 and one or more antennas 108 and 208.

The example of the wireless device described in FIG. 29 is different from the example of the wireless described in FIG. 23 in that the processors 102 and 202 and the memories 104 and 204 are separated in FIG. 23 whereas the memories 104 and 204 are included in the processors 102 and 202 in the example of FIG. 29. That is, the processor and the memory may constitute one chipset.

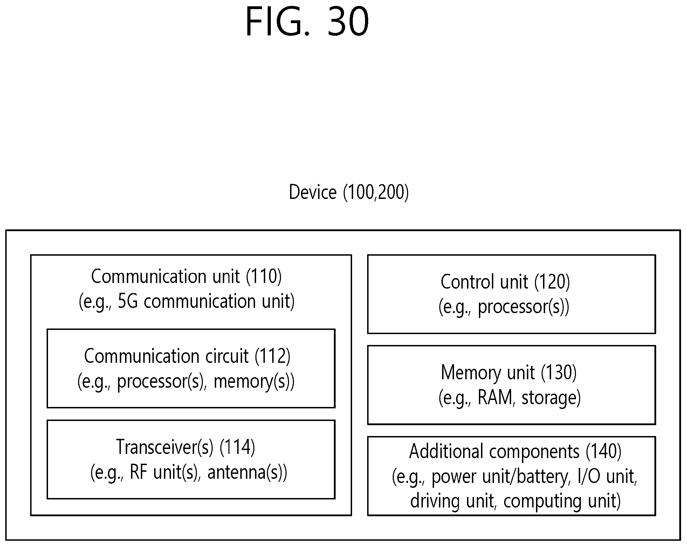

FIG. 30 shows another example of a wireless device applied to the present specification. The wireless device may be implemented in various forms according to a use-case/service.

Referring to FIG. 30, wireless devices 100 and 200 may correspond to the wireless devices 100 and 200 of FIG. 23 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204. For example, the transceiver(s) 114 may include the one or more transceivers 106 and 206 and/or the one or more antennas 108 and 208 of FIG. 23. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. In addition, the control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot 100a of FIG. 34, the vehicles 100b-1, 100b-2 of FIG. 34, the XR device 100c of FIG. 34, the hand-held device 100d of FIG. 34, the home appliance 100e of FIG. 34, the IoT device 100f of FIG. 34, a digital broadcast UE, a hologram device, a public safety device, an MTC device, a medicine device, a fintech device (or a finance device), a security device, a climate/environment device, the AI server/device 400 of FIG. 34, the BSs 200 of FIG. 34, a network node, etc. The wireless device may be used in a mobile or fixed place according to a use-example/service.

In FIG. 30, various elements, components, units/parts, and/or modules within the wireless devices 100 and 200 may be entirely interconnected through a wired interface, or at least a portion may be wirelessly connected through the communication unit 110. For example, within the wireless devices 100 and 200, the control unit 120 and the communication unit 110 may be connected by wire, and the control unit 120 and the first unit (e.g., 130 and 140) may be connected through the communication unit 110. Additionally, each element, component, unit/part, and/or module within the wireless devices 100 and 200 may further include one or more elements. For example, the control unit 120 may be comprised of one or more processor sets. For example, the control unit 120 may be comprised of a communication control processor, an application processor, an electronic control unit (ECU), a graphics processing processor, and a memory control processor. As another example, the memory unit 130 includes random access memory (RAM), dynamic RAM (DRAM), read only memory (ROM), flash memory, volatile memory, and non-volatile memory. volatile memory) and/or a combination thereof.

A hand-held device to which this specification applies is exemplified. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT).

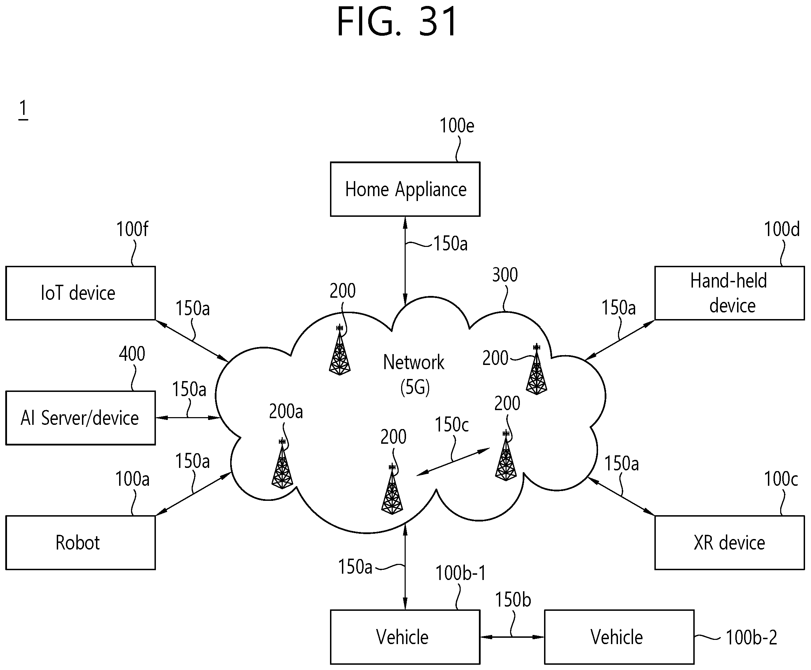

FIG. 31 illustrates a communication system 1 applied to the present specification.

Referring to FIG. 31, a communication system 1 applied to the present specification includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). In addition, the IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication(e.g. relay, Integrated Access Backhaul(IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

Meanwhile, the NR supports multiple numerologies (or subcarrier spacing (SCS)) for supporting diverse 5G services. For example, if the SCS is 15kHz, a wide area of the conventional cellular bands may be supported. If the SCS is 30kHz/60kHz, a dense-urban, lower latency, and wider carrier bandwidth is supported. If the SCS is 60kHz or higher, a bandwidth greater than 24.25GHz is used in order to overcome phase noise.

An NR frequency band may be defined as a frequency range of two types (FR1, FR2). Values of the frequency range may be changed. For example, the frequency range of the two types (FR1, FR2) may be as shown below in Table 6. For convenience of explanation, among the frequency ranges that are used in an NR system, FR1 may mean a "sub 6GHz range", and FR2 may mean an "above 6GHz range" and may also be referred to as a millimeter wave (mmW).

**[Table 6]**

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As described above, the values of the frequency ranges in the NR system may be changed. For example, as shown in Table 7 below, FR1 may include a band in the range of 410MHz to 7125MHz. That is, FR1 may include a frequency band of at least 6GHz (or 5850, 5900, 5925 MHz, and so on). For example, a frequency band of at least 6GHz (or 5850, 5900, 5925 MHz, and so on) included in FR1 may include an unlicensed band. The unlicensed band may be used for diverse purposes, e.g., the unlicensed band for vehicle-specific communication (e.g., automated driving).

**[Table 7]**

| Frequency Range designation | Corresponding frequency range | Subcarrier Spacing (SCS) |
|---|---|---|
| FR1 | 410MHz - 7125MHz | 15, 30, 60kHz |
| FR2 | 24250MHz - 52600MHz | 60, 120, 240kHz |

Claims disclosed in the present specification can be combined in various ways. For example, technical features in method claims of the present specification can be combined to be implemented or performed in an apparatus, and technical features in apparatus claims of the present specification can be combined to be implemented or performed in a method. Further, technical features in method claims and apparatus claims of the present specification can be combined to be implemented or performed in an apparatus. Further, technical features in method claims and apparatus claims of the present specification can be combined to be implemented or performed in a method.

## Claims

1. A method performed by a user equipment (UE) in a wireless communication system, the method comprising:
receiving first information for configuring periodic full duplex (FD) time resources;
receiving second information indicating non-FD time resources; and
performing a transmission and reception operation based on the first information and the second information,
wherein the second information is information for switching some of the FD time resources to the non-FD time resources in units of a specific period, and
wherein the specific period is a time interval equal to a time division duplex (TDD) period provided by TDD configuration information or a multiple of the TDD period.

2. The method of claim 1, wherein, based on the FD time resources being a plurality of consecutive symbols within the specific period, the non-FD time resources comprise N1 (N1 is a natural number) consecutive symbols from a first symbol among the plurality of symbols and N2 (N2 is a natural number) consecutive symbols from a last symbol among the plurality of symbols.

3. The method of claim 2, wherein the second information comprises information related to the N1 and information related to the N2.

4. The method of claim 2, wherein candidate values of the N1 and the N2 are configured through a radio resource control (RRC) message, and wherein information indicating at least one of the candidate values is received through at least one of a media access control (MAC) control element (CE) and downlink control information (DCI).

5. The method of claim 1, wherein an operation of switching some of the FD time resources to the non-FD time resources is performed with a period of a time division duplex (TDD) uplink-downlink pattern as a minimum unit.

6. The method of claim 1, wherein the FD time resources are semi-statically configured by a higher layer signal.

7. The method of claim 1, wherein the non-FD time resources are dynamically indicated by DCI.

8. The method of claim 1, wherein, based on the FD time resources being configured in a plurality of periods, the non-FD time resources comprise all of FD time resources included in any one of the plurality of periods.

9. A user equipment (UE) comprising:
at least one transceiver;
at least one memory; and
at least one processor operably connectable to the at least one transceiver and the at least one memory,
wherein the at least one memory stores instructions that, based on being executed by the at least one processor, cause the at least one processor to perform operations comprising:
receiving first information for configuring periodic full duplex (FD) time resources;
receiving second information indicating non-FD time resources; and
performing a transmission and reception operation based on the first information and the second information,
wherein the second information is information for switching some of the FD time resources to the non-FD time resources in units of a specific period, and
wherein the specific period is a time interval equal to a time division duplex (TDD) period provided by TDD configuration information or a multiple of the TDD period.

10. The UE of claim 9, wherein, based on the FD time resources being a plurality of consecutive symbols within the specific period, the non-FD time resources comprise N1 (N1 is a natural number) consecutive symbols from a first symbol among the plurality of symbols and N2 (N2 is a natural number) consecutive symbols from a last symbol among the plurality of symbols.

11. The UE of claim 10, wherein the second information comprises information related to the N1 and information related to the N2.

12. The UE of claim 10, wherein candidate values of the N1 and the N2 are configured through a radio resource control (RRC) message, and wherein information indicating at least one of the candidate values is received through at least one of a media access control (MAC) control element (CE) and downlink control information (DCI).

13. The UE of claim 9, wherein an operation of switching some of the FD time resources to the non-FD time resources is performed with a period of a time division duplex (TDD) uplink-downlink pattern as a minimum unit.

14. The UE of claim 9, wherein the FD time resources are semi-statically configured by a higher layer signal.

15. The UE of claim 9, wherein the non-FD time resources are dynamically indicated by DCI.

16. The UE of claim 9, wherein, based on the FD time resources being configured in a plurality of periods, the non-FD time resources comprise all of FD time resources included in any one of the plurality of periods.

17. An apparatus for a user equipment (UE), the apparatus comprising:
at least one transceiver;
at least one memory; and
at least one processor operably connectable to the at least one transceiver and the at least one memory,
wherein the at least one memory stores instructions that, based on being executed by the at least one processor, cause the at least one processor to perform operations comprising:
receiving first information for configuring periodic full duplex (FD) time resources;
receiving second information indicating non-FD time resources; and
performing a transmission and reception operation based on the first information and the second information,
wherein the second information is information for switching some of the FD time resources to the non-FD time resources in units of a specific period, and
wherein the specific period is a time interval equal to a time division duplex (TDD) period provided by TDD configuration information or a multiple of the TDD period.

18. A non-transitory computer readable medium (CRM) comprising at least one instruction that, based on being executed by at least one processor, directs a device to:
receive first information for configuring periodic full duplex (FD) time resources;
receive second information indicating non-FD time resources; and
perform a transmission and reception operation based on the first information and the second information,
wherein the second information is information for switching some of the FD time resources to the non-FD time resources in units of a specific period, and
wherein the specific period is a time interval equal to a time division duplex (TDD) period provided by TDD configuration information or a multiple of the TDD period.

19. A method performed by a base station in a wireless communication system, the method comprising:
transmitting first information for configuring periodic full duplex (FD) time resources to a user equipment (UE);
transmitting second information indicating non-FD time resources to the UE; and
communicating with the UE based on the first information and the second information,
wherein the second information is information for switching some of the FD time resources to the non-FD time resources in units of a specific period, and
wherein the specific period is a time interval equal to a time division duplex (TDD) period provided by TDD configuration information or a multiple of the TDD period.

20. A base station comprising:
at least one transceiver;
at least one memory; and
at least one processor operably connectable to the at least one transceiver and the at least one memory,
wherein the at least one memory stores instructions that, based on being executed by the at least one processor, cause the at least one processor to perform operations comprising:
transmitting first information for configuring periodic full duplex (FD) time resources to a user equipment (UE);
transmitting second information indicating non-FD time resources to the UE; and
communicating with the UE based on the first information and the second information,
wherein the second information is information for switching some of the FD time resources to the non-FD time resources in units of a specific period, and
wherein the specific period is a time interval equal to a time division duplex (TDD) period provided by TDD configuration information or a multiple of the TDD period.
